(19) **Europäisches Patentamt**

**European Patent Office**

**Office européen des brevets**

(11) Publication number : **0 464 827 B1**

(12) # EUROPEAN PATENT SPECIFICATION

(45) Date of publication of patent specification :
19.04.95 Bulletin 95/16

(51) Int. Cl.⁶ : **G11B 5/704**

(21) Application number : **91111149.0**

(22) Date of filing : **04.07.91**

(54) Magnetic recording medium and method for making the same.

(30) Priority : **05.07.90 JP 177710/90**
**04.09.90 JP 234885/90**
**31.01.91 JP 10639/91**

(43) Date of publication of application :
**08.01.92 Bulletin 92/02**

(45) Publication of the grant of the patent :
**19.04.95 Bulletin 95/16**

(84) Designated Contracting States :
**DE FR GB**

(56) References cited :
EP-A- 0 312 074
US-A- 4 600 638
US-A- 4 789 583
Derwent Publications Ltd., LONDON, GB;
DATABASE WPIL, accession no. 91-
205323,week 9128;
PATENT ABSTRACTS OF JAPAN vol. 13, no.
428 (P-936) 25 September 1989, JP-A-01
159828 (KONICA CORP) 22 June 1989 &
JP-A-01 159828 (KONICA CORP) 22 June 1989

(73) Proprietor : **MATSUSHITA ELECTRIC**
**INDUSTRIAL CO., LTD.**
**1006, Oaza Kadoma**
**Kadoma-shi, Osaka-fu, 571 (JP)**

(72) Inventor : **Goto, Yoshiki**
**2-14-11, Takatsukadai,**
**Kawai-cho**
**Kitakatsuragi-gun, Nara Pref. 636 (JP)**
Inventor : **Shimasaki, Yukihiro**
**Bahdo-taun B-12**
**Akashiadai, Sanda City, 669-13 (JP)**
Inventor : **Honda, Kazuyoshi**
**5-34, Jonan-cho 1-chome**
**Takatsui City, 569 (JP)**
Inventor : **Ishida, Tatsuaki**
**998-3-3-1421 Nakamozu-cho 6-cho**
**Sakai City, 591 (JP)**
Inventor : **Tohma, Kiyokazu**
**26-5, Ikaga-nishimachi**
**Hirakata City 573 (JP)**
Inventor : **Sugita, Ryuji**
**8-7, Ogura-cho**
**Hirakata City 573 (JP)**
Inventor : **Kawawake, Yasuhiro**
**1-A1-213, Satakedai 1-chome**
**Suita City 565 (JP)**

(74) Representative : **Dr. Elisabeth Jung Dr. Jürgen**
**Schirdewahn Dipl.-Ing. Claus Gernhardt**
**Postfach 40 14 68**
**D-80714 München (DE)**

EP 0 464 827 B1

## Description

### 1. FIELD OF THE INVENTION

The present invention relates to a magnetic recording medium having a high recording density and which is applicable to various devices in information industry, and it also relates to method for making the same.

### 2. DESCRIPTION OF THE RELATED ART

A coated type magnetic recording medium (which consists of a coating of uniformly dispersed, powdered ferromagnetic material such as $\gamma$-$Fe_2O_3$, Co-$\gamma Fe_2O_3$ or $CrO_2$ in organic binder on a non-magnetic substrate) has been used as the magnetic recording medium (e.g. magnetic flexible disk, magnetic tape etc.). Now, in order to make a high density recording a thin metal film type magnetic recording medium has been investigated instead of the coated type magnetic recording medium. And in the thin metal film type magnetic recording medium, a magnetic recording metal film is directly formed on a non-magnetic substrate by a plating method, a sputtering method, a vacuum deposition method, an ion plating method or the like.

When the thin metal film type magnetic recording medium is used actually, smooth runability is not obtained and it results in extremely unstable signals in recording/reproducing. The reason is a large friction between the bare back face (i.e. the opposite face of the substrate to the one face coated by the magnetic recording metal film) of the non-magnetic substrate and guides or posts. Thus, in actual use of the thin metal film type magnetic recording medium, a back coat layer having a low and stable coefficient of friction and having a strong wear resistance is necessary, and further it is important to maintain these features under bad environmental conditions in actual use.

Examples of the back coat layer made of material of the vinylchloride group or vinylacetate group are shown, for instance in U.S.Pat.No. 4,567,083, U.S.Pat.No. 4,587,150, U.S.Pat.No. 4,618,535, U.S.Pat.No. 4,628,009, U.S.Pat.No. 4,639,389, U.S.Pat.No. 4,663,217, U.S.Pat.No. 4,673,622, U.S.Pat.No. 4,592,942, U.S.PAT.No. 4,618,535, U.S.Pat.No. 4,448,847, U.S.Pat.No. 4,789,583 and U.S.Pat.No. 4,786,557.

Examples of the same layer made of polyester group or acrylic group materials are shown, for instance in U.S.Pat.No. 4,687,699, U.S.Pat.No. 4,637,963 and U.S.Pat.No. 4,443,514. And Examples of the same layer made of polyurethane group materials are shown, for instance in U.S.Pat.No. 4,567,063, U.S.Pat.No. 4,612,244, U.S.Pat.No. 4,612,235 and U.S.Pat.No. 4,587,150.

These conventional back coat layers showed improved runability, but undesirable exfoliation in running was observed. Thus, there were such problems that: wear resistance is insufficient, undesirable transfer of components in the back coat layer onto the magnetic recording film and/or undesirable transcription of shape of the back coat film surface onto the magnetic recording film surface is likely to occur.

### OBJECT AND SUMMARY OF THE INVENTION

The present invention is intended to solve the above-mentioned problems. The purpose of the present invention is to provide a magnetic recording medium having improved stability in running, improved durability, no-transfer of components and no-transcription of shape and to provide a method for making it.

These objects are accomplished by a magnetic recording medium according to the subject-matter of claim 1.

Owing to the special composition of the back coat layer, improved characteristics of contact with a post and the like was obtained so that smooth running conditions under small tension were realized, and a magnetic recording medium having small head wear and improved wear resistance was obtained. The magnetic recording medium having stable runability and improved wear resistance was realized. And further, the magnetic recording medium of the present invention has the flat shape improved in correction of curl.

According to the method for forming the magnetic recording medium of the present invention, a magnetic recording medium having good surface smoothness, enlarged Young's modulus and good runability was realized, since the coating material with a special composition including polyurethane as a main component and having a suitable mixing ratio of components was applied. Additionally, an improved magnetic recording medium having a smoother surface and no transcription of shape was obtained, owing to a filtration process and/or applying the most suitable coating conditions.

While the novel features of the invention are set forth particularly in the appended claims, the invention, both as to conception and content, will be better understood and appreciated, along with other objects and features thereof, from the following detailed description taken in conjunction with the drawings.

## BRIEF DESCRIPTION OF THE DRAWINGS

FIG.1 is a cross-sectional view of a magnetic recording medium of the present invention.

FIG.2 is a flow diagram showing a gravure coating process for forming a back coat layer.

FIGs. 3, 4, 5, 6, 7 and 8 are enlarged perspective views (with 100 fold magnification) of the back coat layer of respective Comparison example 8-1, 8-2 and 8-3, Examples 8-1 and 8-2 and Comparison example 8-4 which were obtained by the surface roughness meter.

FIG.9(a) is an enlarged perspective view (with 100 fold magnification) of the back coat layer of Example 10-1.

FIG.9(b) is an enlarged perspective view (with 100 fold magnification) of the magnetic recording film of Example 10-1.

FIG.10(a) is an enlarged perspective view (with 100 fold magnification) of the back coat layer of Comparison example 10-1.

FIG.10(b) is an enlarged perspective view (with 100 fold magnification) of the magnetic recording film of Comparison example 10-1.

FIGs. 11, 12, 13, 14, 15, 16, 17 and 18 are enlarged perspective views (with 100 fold magnification) of the back coat layer of respective Example 12-1, Comparison example 12-1, Comparison example 12-2, Example 12-2, Comparison example 12-3, Example 12-3, Comparison example 12-4 and Example 12-4 which were obtained by the surface roughness meter.

FIG.19 is a graph showing the temperature in respective portions of the drying room as to respective Examples 13-1, 13-2 and 13-3.

FIGs. 20, 21 and 22 are enlarged perspective views (with 100 fold magnification) of the back coat layer of respective Examples 13-1, 13-2 and 13-3 which were obtained by the surface roughness meter.

FIG.23(a) is a wave form of a reproduced signal of Example 14-1 observed on the oscilloscope.

FIG.23(b) is a wave form of a reproduced signal of Comparison example 14-1 observed on the oscilloscope.

It will be recognized that some or all of the Figures are schematic representations for purposes of illustration and do not necessarily depict the actual relative sizes or locations of the elements shown.

## DESCRIPTION OF THE PREFERRED EMBODIMENT

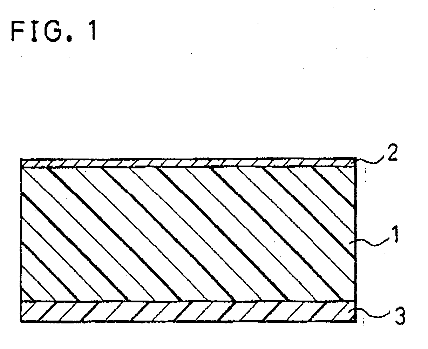

The present invention is elucidated in detail with reference to the accompanying drawings. FIG. 1 is a cross-sectional view of a magnetic recording medium of the present invention. A magnetic recording film 2 is formed on one face of non-magnetic substrate 1, a back coat layer 3 is formed on the opposite face of the non-magnetic substrate 1 to the one face covered by the magnetic recording film 2.

Suitable film, sheet or the like for the non-magnetic substrate 1 used in the magnetic recording medium of the present invention is made by selecting at least one material from the following known substances: high polymer such as polyamide, polyimide, polysulfone, polycarbonate, polypropylene, polyethylene, polyethlene terephthalate, polyethylene naphthalate, polycellulose acetate, polyvinyl chloride and the like; non-magnetic metal; ceramics such as glass, porcelain and the like.

Suitable ferromagnetic material for forming the magnetic recording film 2 is at least one alloy of a metal selected from the Co group (Co, Ni and Fe), like an alloy thereof with Cr, Mn, Ti, P, Y, Sm, Bi and an oxidized metal including said alloy of the Co group. Among these materials, an alloy of at least two elements selected from Co, Cr and Ni is preferable for composing the magnetic recording film, since it has a high magnetic anisotrophy energy and high saturated magnetization. The magnetic recording film is formed by the-following known methods: a vapor deposition, a sputtering, an ion plating, a plating or the like. The magnetic recording film made of the alloy of Co and Cr, also in the oxidized state, is more preferable in actual use owing to its high corrosion resistance. The magnetic recording film 2 used in the present invention can be made from other material as mentioned above.

The back coat layer 3 in the present invention includes the following materials:

[Main agent of polyurethane]

Since a thin metal magnetic recording film of a Co group alloy has mechanical features which are different from those of the non-magnetic substrate, it is necessary to select a material for the main agent of polyurethane in consideration of suppression of the following three problems: undesirable curling of the substrate, undesirable transfer of a component in the back coat layer onto the magnetic recording film and undesirable transcription of the shape of the back coat film surface onto the same. A suitable material for main agent of polyurethane is a material having high molecular weight of from 45,000 to 52,000 and having a glass-transition temperature (hereinafter it is abbreviated to Tg) under the room temperature.

Preferable Tg is about 10°C. And most preferable the average molecular weight of the material is about 50.000 in consideration of Young's modulus, thickness and wear resistance of the back coat film. In forming the binder, it is possible to control the Tg of the whole urethane by adding minor amounts of a second polyurethane having high Tg above 60°C and having a high degree of polymerization to the first polyurethane having Tg of about 10°C.

In order to improve mechanical properties such as Young's modulus, and additionally high glossiness, nitrocellulose is added as a mixture of two kinds of nitrocellulose having different molecular weights.

[Hardener]

An isocyanate having three functional groups which is made of trismethylolpropane and tolylenediisocyanate is usable as a hardener.

[Carbon powder]

Carbon powder is used to obtain electric conductivity and to improve runability. The amount of the carbon powder is controlled such to obtain suitable electric conductivity in the range of from $10^{10}\Omega/cm^2$ to $10^6\Omega/cm^2$, and the range of the electric conductivity is determined by the metal component used in the magnetic recording film. The diameter of the carbon particles in the carbon powder is selected in consideration of easy dispersion in a liquid and for effective obtainment of runability.

In the present invention it is used a mixture of both very fine carbon particles (a) and coarse carbon particles (b). The very fine carbon particles (a) have an average particle diameter of about $0.02\mu m$ and that of the coarse carbon particles (b) is greater than $0.3\mu m$. Thereby, both effects are obtained, i.e. electric conductivity owing to the very fine carbon particles (a) and runability owing to the coarse carbon particles (b).

In order to further improve runability, it is preferable to add also carbon particles (c) having a different diameter from these carbon particles (a) and (b), thereby obtaining a coarse surface of the back coat layer, and the average particle diameter of the carbon particles (c) is preferably below $1.0\mu m$ in consideration of a thin thickness of the back coat film.

A surface modification of the carbon powder is effective for improvement of dispersion and runability, and a surface treatment such as a dechlorination is effective for improvement of corrosion resistance. It is possible to use the above-mentioned carbon powders after the surface modification or the surface treatment. These particles after the surface modification or the surface treatment contribute to the inside hardening of the back coat layer.

[Inorganic abrasive]

The material used as the inorganic abrasive pigment includes alumina powder, which is an amorphous mixture of alumina and CoO. The inorganic abrasive pigment has a suitable diameter selected to maintain sufficient wear resistance against posts, guides and the like which the back coat layer makes direct contact with in running. Further, the inorganic abrasive pigment is used for giving surface glossiness to the back coat layer.

[Lubricant]

It is preferable to add a lubricant, since runability is more improved owing to the lubricant. A lubricant material is a compound of a higher hydrocarbon or a compound of a fluoro hydrocarbon, which has a polar group such as a fatty acid, a salt thereof, an ester thereof, an amido derivative thereof or an alcohol derivative thereof. And it is possible to mix only perfluoropolyether in liquid phase, an organic lubricant with a molybdenum group or combination thereof with the above-mentioned compound. The amount of the (added) lubricant should be determined in consideration of sufficient dispersion of solution, the degree of improvement for runability and the undesirable transfer of a component in the back coat layer onto the magnetic recording film. And it is preferably less than 1 wt%.

[Additive]

It is possible to add a first additive for the promotion of hardening and/or a second one for improvement of dispersion. A suitable first additive is as follows: an alkylthiol, an alkylamine or a silane coupling agent with an alkyl group having an epoxy group or a carboxylic acid, which has a small number of carbon atoms. A suitable second additive is a dispersant such as lecithin.

The thickness of the back coat layer changes according to the total thickness of the magnetic recording medium. When the manufacture can be carried out, there is no limitation as regards a thin thickness of the back coat layer as far as a significant transcription of shape does not occur. Through our experiments it was established that, when a thickness of the back coat film was in the range of less than 1.0μm, unusual transcription of shape onto the magnetic recording film surface due to the carbon powder and inorganic abrasive pigment was not observed. Thus, the back coat film having a thickness less than 1.0μm was suitable in consideration of undesirable transcription of shape. However, when the thickness of the back coat film is less than 0.15μm, electric conductivity is reduced above $10^{10}\Omega/cm^2$. Thus, the thickness of the back coat layer is preferably thicker than 0.15μm.

In a method for making a magnetic recording medium, it is important that all steps should be carried out in accordance with specifics and that production rate should be made constant.

The present invention proposes a method for making a magnetic recording medium with the characteristics mentioned above which process comprises the following steps:

a step of forming a magnetic recording film on one face of a non-magnetic substrate; and

a step of forming a back coat layer by coating a coating material comprising a polyurethane having a Tg of about 10°C, an isocyanate hardener, carbon powder, an inorganic abrasive pigment and a solvent, on the opposite face of said non-magnetic substrate to said one face covered by said magnetic recording film.

In order to utilize the special feature of each material, some contrivance in preparation of the coating material for the back coat layer and the most suitable coating conditions for the coating material are necessary.

In the preparation of the coating material, some problems may arise such that the mixing of the materials are not providing suitable diameters in accordance with the specifics or an exposure of carbon particles and/or inorganic abrasive pigment particles during the hardening process occurs frequently. These problems apparently result in worsened runability, electric conductivity and degree of hardening. And also an undesirable transfer, transcription and/or adhesion onto the magnetic recording film surface may occur.

Coating conditions, such as types of a gravure roll used, rotating speed thereof, pressure of a blade, applying speed, control of temperature for drying and the like, have a large influence upon the finished surface of the back coat layer.

Owing to both, use of contrivances in preparation of the coating material and use of suitable coating conditions of the same, uniformity and smoothness of the finished surface of the back coating layer are obtainable in spite of a wide surface area. An improved magnetic recording medium is therefore obtainable wherein the transcription of shape has only small influence on the magnetic recording film and a flat envelope of signal in recording/reproducing is obtained.

Some contrivances used in preparing the coating material are selections of suitable proportions of each component of the coating material and a suitable filtration.

Suitable proportions of each component are as follows:

| | |
|---|---|
| Polyurethane | ... 2--- 3wt% |
| Isocyanate hardener | ... 2---3.5wt% |
| Methyl ethyl ketone | ... 15---18wt% |
| Toluene | ... 24---30wt% and |
| Cyclohexane | ... 3--- 5wt%. |

Owing to the above-mentioned proportion, the coating material has a suitable viscosity for coating and brings enough inside hardening of the back coat layer. The effect of increasing the boiling point owing to the use of mixed solvents results in a coating material having low volatility.

Somehow conventional mixing of carbon powder and abrasive pigment within the respective specified ranges of each particle sometimes results in a mixture including particles of unusual diameter, and this leads to undesirable projections on the surface of the back coat layer. But we have found that the coating material after filtration results in a mixture including no particles having an unusual diameter.

Thus, the coating material necessitates carrying out a filtration, wherein it is important to select a suitable filter medium and to determine suitable conditions of the filtration.

A suitable filter medium should have such a performance (feature) that particles which pass through the filter have an average particle diameter of 0.4μm and a maximum diameter of 1.0μm. Suitable conditions for the filtration areas follows:

Pressure of filtration ... less than 2 kg/cm²

Period for filtration ... more than 60 minutes*1

Owing to the above-mentioned filtration, a smooth surface of the back coat layer is obtained, whereon no particles having an unusual diameter and no projections of particles are observed. And there is no influence owing to a transcription of shape of the back coat layer onto the magnetic recording film.

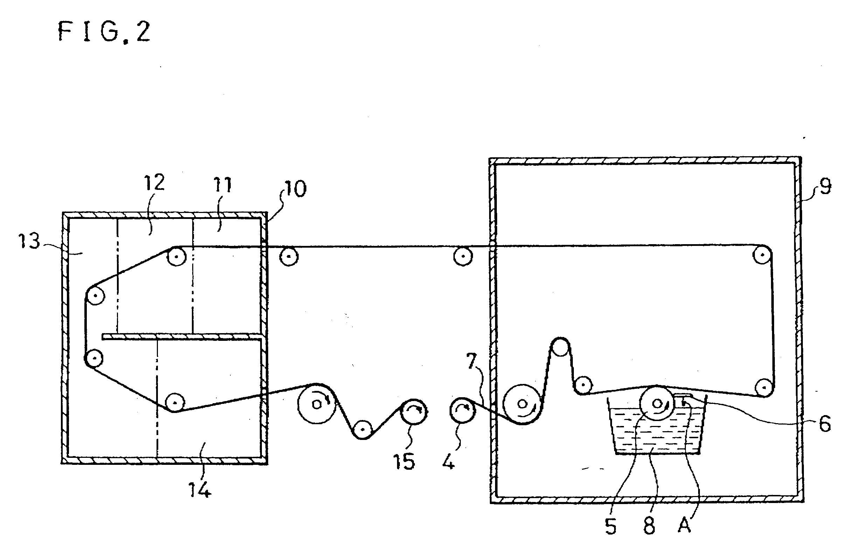

Suitable coating conditions for forming a back coat layer have been found through our experiments. FIG. 2 shows a gravure coating process for forming a back coat layer used in the present invention. The gravure coating process comprises a coating material transfer process and a drying process.

In FIG.2, the coating material transfer process is carried out in a coating room 9, and the drying process is carried out continuously in a drying room 10. The non-magnetic substrate whose one face is covered by the magnetic recording film (it is abbreviated as tape 7) is rolled on a supplying reel 4. The tape 7 is fed out and transferred on the gravure roll 5, whereon coating material for the back coat layer 8 is applied on the opposite face of the non- magnetic substrate to the one covered by the magnetic recording film through rotating gravure roll 5.

A blade 6 holds down the gravure roll 5 as shown by an arrow A for controlling the amount of the coating material which sticks to the surface of the gravure roll 5. That is, a pressure toward the arrow A is applied to the gravure roll 5 by the blade 6, and hereinafter it is abbreviated to a pressure of blade. The immersing depth of gravure roll is defined by the part of the gravure roll 5 which is immersed in the coating material 8.

Then the tape 7 is drawn into the drying room 10. The drying room 10 is divided into four portions (i.e. first 11, second 12, third 13 and fourth 14). In the actual drying room 10, there was no actual wall or the like for dividing these portions 11, 12, 13 and 14. But in each portion, a set of heater and a controller (including an electric thermometer) therefor is used in order to keep a constant temperature in the portion. The set of a heater and a controller is not shown in FIG.2. The control of temperature for drying is made by setting the temperature in each portion . The dried tape 7 is wound up by a winding reel 15.

In the transfer process, it is necessary to adjust the following parameters suitably:

Pressure of the blade 6,

Depth of the gravure roll 5,

Rotating speed of the gravure roll 5,

Tape speed and

Temperature for drying.

In case the coating conditions of the transfer process are not suitable, the back coat layer has a striped pattern and/or the thickness of the same becomes unequal and, it does not satisfy the desirable specifics. It is necessary to select such a temperature for drying that a minutely finished surface of the back coat layer is obtainable owing to rapid volatility of the solvent in the hardening process of the back coat layer, as far as there occurs no damage to the magnetic recording film.

Only after having made sufficiently such studies as above-mentioned, a back coat layer having improved features for practical use is obtainable. The best mode method for making the back coat layer is described hereafter.

Apart from the back coat layer of the magnetic recording medium described in the present invention, the present invention is applicable to a magnetic recording medium which has a magnetic recording film having a protection layer and/or lubricant layer as a matter of course.

Detailed elucidation as to concrete examples has been made hereafter.

**Experiment 1**

[Example 1-1]

Tape samples of Example 1-1 were made by the following procedure:

STEP(a): Co-Cr (Co:Cr=8:2 in ratio of atoms) was deposited on one face of a 9μm thick polyimide film (having 150mm width) as the non-magnetic substrate 1 by a continuous vapor deposition method to form

---

*1 wherein the filtrating rate of the coating material is about 1000g/min.

a 1600Å thick Co-Cr film as the magnetic recording film 2, and the thickness of the Co-Cr film was determined by SEM (Scanning Electron Microscope);

STEP(b): A coating material for the back coat layer was prepared by mixing and dispersion of the following materials;

(1) Polyurethane (Mw[1] : 50,000)    ... 36.0 parts[2]

(2) Nitrocellulose

    (2.1) Nitrocellulose having a low molecular weight

       (Index of average molecular weight of 1/16

       sec[3])

                            ... 25.5 parts

    (2.2) Nitrocellulose having a high molecular

    weight (Index of average molecular weight of 1/2

       sec[3])

                            ... 10.6 parts

(3) Carbon black

    (3.1) Carbon black (a)

       (Average particle diameter : 0.023μm)

                            ... 85.0 parts

    (3.2) Carbon black (b)

(Average particle diameter : $0.3\mu$m)

        ... 0.5 parts

(4) Abrasive pigment ($CoAl_2O_3$)

   (Average particle diameter : 0,45 $\mu$m )

        ... 4.2 parts

(5) Isocyanate hardener    ... 14.4 parts

(6) Stearic acid       ... 2.0 parts

(7) Methyl ethyl ketone   ... 65.0 parts

(8) Toluene         ...105.2 parts

(9) Cyclohexane      ... 13.3 parts;

[1] Hereinafter average molecular weight is abbreviated as Mw.

[2] Hereinafter parts of components are all by weight.

[3] Hereinafter the index of average molecular weight of nitrocellulose was measured in conformity to JIS (Japanese Industrial Standard) K 6721.

STEP(c): The coating material for the back coat layer was applied on the opposite face of the polyimide film to the one face deposited by the magnetic recording film, and dried to form a 0.4μm thick back coat layer with the use of the gravure coating process shown in FIG. 2 under the following condition:

(1) Gravure mesh        ... #150[1]

(2) Rotation speed of the gravure roll 5

        ... 100 rpm

(3) Tape speed       ... 5 m/min

(4) Temperature for drying ... 110---120℃; and

[1] Hereinafter, it means that gaps to the number of 150 per 2.54 cm (1 inch) are graved.

STEP(d): The applied film was slit to give tape samples (8mm width, 3m length).

[Comparison example 1]

Tape samples of this Comparison example 1-1 were made by the same steps as that of Example 1-1 except the omission of the STEP(b) and STEP(c), hence omission of forming the back coat layer.

The following evaluation test as to running was made on different tape sample obtained in the foregoing example and comparison example.

[Dynamic frictional coefficient ($\mu$k) by the sailing method]

Repeating 50 transits runnings by each tape sample were made with a known sailing instrument having strain meters. Measurements of the dynamic frictional coefficient (hereinafter it is abbreviated $\mu$k) were made at the first transit and after repeating 50 transits, and the surface of each tape sample was observed. 1 transit means 1 round-trip of the tape. The conditions as to running by the sailing instrument are as follows:

The tape sample was wound on and around a post ($4\phi \times 25$mm length) made of SUS303-stainless steel (having a mean surface roughness of Ra 0.2S) at a winding angle of 180° ; tension was 10 --- 40 gf; and running speed was 18 mm/min.

Table 1 shows the results of the evaluation test.

## Table 1

| Example | $\mu_k$ | |
|---|---|---|
| | 1st transit | After repeating 50 transits |
| Example 1 | 0.15 | 0.16 |
| Comparison example 1-1 | 0.3 | 0.68 |

As shown in Table 1, in the magnetic recording medium having no back coat layer, according as the number of transits became large, the value of $\mu$k became large.

In contrast, the magnetic recording medium of Example 1-1 embodying the present invention showed smooth runability at the 1st transit, and the smooth runability has not been deteriorated even after repeating 50 transits so that it showed improved wear resistance wherein undesirable exfoliation does not occur.

Thus, it is understood that a magnetic recording medium of the present invention having improved runability was obtained by applying the back coat layer on the opposite face of the non-magnetic substrate to the one face covered by the magnetic recording film of Co-Cr, and that the back coat layer includes polyurethane, an isocyanate hardener , carbon powder and inorganic abrasive.

**Experiment 2**

[Examples 2-1, 2-2 and 2-3 and Comparison examples 2-1, 2-2 and 2-3]

Many examples and comparison examples were performed by using plural kinds of urethane having a different average molecular weight and Tg. And there is a relationship between average molecular weight and Tg. That is, the larger the average molecular weight becomes, the lower the Tg becomes. These examples and comparison examples were carried out in the same way as that of Example 1-1 except that the thickness of the back coat layer was 0.3μm. The magnetic recording film surface of each tape sample was observed.

The result of observation was defined as follows:

(i) Convexity: The magnetic recording film surface was shaped convex, and this convex shape is not good as a shape of the magnetic recording medium;

(ii) Concavity: The magnetic recording film surface was shaped concave, and this concave shape is not good as a shape of the magnetic recording medium; and

(iii) Flatness: The surface of the magnetic recording film is shaped flat, and this flat shape is good as the shape of the magnetic recording medium.

Average molecular weight and Tg of the polyurethane used in each example and comparison example and results of observation of the same are shown in Table 2.

Table 2

| Sample No. | Average molecular weight (Mw) | Glass-transition temperature (Tg) | Observation of the magnetic film surface |
|---|---|---|---|
| Comparison example 2-1 | 10,000 | -30 °C | Concave |
| Comparison example 2-2 | 20,000 | > 50 °C | Convex |
| Comparison example 2-3 | 30,000 | > 50 °C | Convex |
| Example 2-1 | 45,000 | 15 °C | Flat |
| Example 2-2 | 50,000 | 10 °C | Flat |
| Example 2-3 | 52,000 | < 10 °C | Flat |

From the data shown in Table 2, the following conclusion was obtained:

The shape of the magnetic recording medium was changed according to the Tg of polyurethane used therein. When the polyurethane having a Tg which is higher than the room temperature was used as shown in Comparison examples 2-2 and 2-3, the shape became convex since shrinkage of the back coat layer is larger than that of the magnetic recording film. In contrast, when the polyurethane having a Tg which is much lower than the room temperature was used as shown in Comparison example 2-1, the shape became concave. And when the polyurethane having a Tg about 10°C and having the average molecular weight of about 50,000 was used, flat shape which is suitable for the magnetic recording medium was obtained.

11

When the Tg was controlled in the range slightly lower than the room temperature by varying the average molecular weight of the polyurethane, the shape of the magnetic recording medium was apt to become flat. And it is more preferable to use polyurethane having a Tg of about 10°C to obtain flatness of the magnetic recording medium.

**Experiment 3**

[Examples 3-1, 3-2 and 3-3 and Comparison examples 3-1, 3-2 and 3-3]

Many examples and comparison examples were carried out by using a plural kind of carbon powder, inorganic abrasive pigment and the like by varying the thickness and the mixing ratio thereof. In this experiment 3, an amorphous mixture of alumina and cobalt oxide is used as the inorganic abrasive.

These examples and comparison examples were performed in the same way as that of Example 1-1 except that:

(A) in the STEP(a): thickness and width of the polyimide film was changed to 10μm thick and 200mm wide;
(B) in the STEP(a): a CoCr film was formed as a first magnetic recording layer satisfying specifics shown in the left column of Table 3 and a CoO film was formed as a second magnetic recording layer on the CoCr film satisfying specifics shown in the right column of Table 3;

## Table 3

| | CoCr film | CoO film |
|---|---|---|
| Temperature of the substrate | 250 °C | 110 °C |
| Deposition rate | (800 Å/sec) 80 nm/sec | (500 Å/sec) 50 nm/sec |
| Incident angle | 55° --- 30° | 25° --- 10° |
| Thickness | (16000 Å) 160 nm | (4000 Å) 40 nm |
| Ratio of Component(Atoms) | Co:Cr=80:20 | Co:O=50:50 |
| Pressure | (5 × 10$^{-5}$ Torr) 0.006666 Pascal | (1 × 10$^{-4}$ Torr) 0.013332 Pascal |

(C) in the STEP(b): the following component were varied as shown in Table 4,

(C-1) As to nitrocellulose, the variation was that nitrocellulose having a low molecular weight was used or not, and that nitrocellulose having a high molecular weight was used or not;

(C-2) As to Carbon particles (black), average diameter, amount and combination of carbon particles were varied;

(C-3) As to the abrasive, average particle diameter and amount of abrasive pigment were varied ; and

(D) in the STEP(c): as shown in the following Table 4, the thickness of the back coat layer was varied.

Table 4

| Sample No. | (a) Nitrocellulose having high molecular weight was used or not / (b) Nitrocellulose having low molecular weight was used or not | (a) Average particle diameter and amount (parts) of the carbon particles (a) / (b) Average particle diameter and amount (parts) of the second carbon particles (b) | Average particle diameter and amount (parts) of the inorganic abrasive pigment | Thickness of the back coat layer (μm) |
|---|---|---|---|---|
| Comparison example 3-1 | (a) Yes (b) Yes | (a) 0.02 μm and 80 parts (b) 0.3 μm and 0.4 parts | 0.45 μm and 4.5 parts | 0.1 |
| Comparison example 3-2 | (a) Yes (b) No | (a) 0.01 μm and 90 parts (b) 0.3 μm and 0.4 parts | 0.35 μm and 4.3 parts | 0.4 |
| Comparison example 3-3 | (a) No (b) No | (a) 0.03 μm and 75 parts (b) 0.5 μm and 0.5 parts | 0.36 μm and 4.0 parts | 0.6 |
| Example 3-1 | (a) Yes (b) Yes | (a) 0.023 μm and 82 parts (b) 0.30 μm and 0.55 parts | 0.55 μm and 4.0 parts | 0.65 |
| Example 3-2 | (a) Yes (b) Yes | (a) 0.023 μm and 80 parts (b) 0.3 μm and 0.6 parts | 0.56 μm and 4.5 parts | 0.15 |
| Comparison example 3-4 | (a) No (b) Yes | (a) 0.02 μm and 90 parts (b) 0.45 μm and 0.5 parts | 0.45 μm and 5.5 parts | 0.25 |
| Comparison example 3-5 | (a) Yes (b) Yes | (a) 0.014 μm and 85 parts (b) 0.55 μm and 0.45 parts | 0.56 μm and 4.6 parts | 0.35 |

The following evaluation tests were made on different video tape samples obtained in the foregoing examples and comparison examples.

14

[Surface conductivity]

The "surface conductivity" was measured by the "four prove method (Baw method)" using a surface conductivity tester type "LORESTA-FP" manufactured by MITSUBISHI PETROCHEMICAL COMPANY, LTD. JAPAN.

[Adhesive property to the base film]

In order to define the adhesive property of the back coat layer to the non-magnetic substrate, after removing a cellophane tape applied on the back coat layer, an exfoliation of the back coat layer was observed. This test is defined in "ASTM-D-3002". In "ASTM-D-3002", squares to the number of 100 are defined on a surface area of the back coat layer; after removing the cellophane tape, the number of squares whereon an exfoliation of the back coat layer was observed are counted.

[Dynamic frictional coefficient ($\mu$k) by drawing method]

The dynamic frictional coefficient ($\mu$k) was measured with a known drawing instrument. A 1m long tape sample was used for measurement under the following conditions: tension "P" was 20 gf; and running speed "v" was 8 mm/sec.

[Cylinder load]

A cylinder load is defined as follows:
A video tape sample having 30m length was installed in a VTR cassette, and it was set in an 8 mm system VTR which has a 40mm$\phi$ cylinder of aluminum having two pairs of amorphous heads("LAM HEAD")[1].
In a play-back state, at a running speed of 14.5mm/min, the cylinder load was measured by a pen recorder as a voltage meter.
Table 5 shows the results of these evaluation tests as to respective sample tapes.

[1] LAM HEAD means Laminated Amorphous Magnetic layer Head.

Table 5

| Sample No. | Conductivity ($\Omega/cm^2$) | A number of squares per 100 squares | Dynamic frictional coefficient ($\mu_\kappa$) | Cylynder load(mV) |
|---|---|---|---|---|
| Comparison example 3-1 | $5 \times 10^7$ | 35/100 | 0.35 | 76 |
| Comparison example 3-2 | $4 \times 10^6$ | 55/100 | 0.28 | 72 |
| Comparison example 3-3 | $8 \times 10^7$ | 50/100 | 0.25 | 56 |
| Example 3-1 | $5 \times 10^6$ | 25/100 | 0.23 | 44 |
| Example 3-2 | $6 \times 10^6$ | 35/100 | 0.22 | 51 |
| Comparison example 3-4 | $3 \times 10^7$ | 65/100 | 0.31 | 60 |
| Comparison example 3-5 | $8 \times 10^6$ | 45/100 | 0.29 | 53 |

From the results shown in Table 5, the following conclusions were obtained:

As to the Comparison example 3-2 including only the nitrocellulose having a low molecular weight, the Comparison example 3-4 including only the nitrocellulose having a high molecular weight and the Comparison example 3-3 including no nitrocellulose, the number of squares was relatively large, and this showed insufficient adhesive property. It would be caused by a decreased mechanical strength of the back coat layer. Moreover, a relatively large dynamic frictional coefficient and cylinder load were shown in these comparison exam-

16

ples, which meant insufficient wear resistance and runability.

In a comparison of the Example 3-1 including the carbon particles of an average particle diameter of 0.023μm with the Comparison example 3-5 including that of an average particle diameter of 0.014μm, a relatively large dynamic frictional coefficient and cylinder load were shown in the Comparison example 3-5. Moreover the adhesive property of the Comparison example 3-5 was inferior to that of the Example 3-1. Thus it was suitable to use additionally the carbon particles having an average particle diameter of about 0.02μm.

From the data of the Comparison examples 3-2, 3-3 and 3-4, it can be taken that although a sufficiently large conductivity (i.e. low surface resistivity) was shown, the adhesive property, the dynamic frictional coefficient and the cylinder load were not good. It means that the average particle diameter and/or the mixing ratio of the carbon powder and/or the adhesive were not suitable in these Comparison examples.

The Comparison example 3-1 which has a relatively thin back coat layer showed unstable runability owing to lowering of the wear resistance as shown by the large value for the cylinder load. In contrast, the Examples 3-1 and 3-2 showed small number of squares, small dynamic frictional coefficientsof about 0.2 and small cylinder loads of about 50mV. Thus, improved runability was obtained in these Examples.

**Experiment 4**

[Example 4-1]

Tape samples of Example 4-1 were made by the following procedure:

STEP(a): Co-Cr (Co:Cr = 8:2 in ratio of atoms, and it is same as that of the Example 1-1.) was deposited on one face of a 9μm thick polyimide film (having 150μm width) as the non-magnetic substrate 1 by a continuous vapor deposition method to form a 2000Å thick Co-Cr film as the magnetic recording film 2, and the thickness of the Co-Cr film was measured by the SEM;

STEP(b): A coating material for the back coat layer was prepared by mixing and dispersion of the following materials;

(1-1) Polyurethane (a) (Mw : 50,000)

... 36.0 parts

(1-2) Polyurethane (b) (Mw : 80,000)

... 3.7 parts

(2) Nitrocellulose

(2.1) Nitrocellulose having **a low molecular weight**

(Index of average molecular weight of 1/16

sec)

... 25.5 parts

(2.2) Nitrocellulose having **a high molecular weight**

(Index of average molecular weight of 1/2

sec)

... 10.6 parts

(3) Carbon black

(3.1) Carbon black (a)

(Average particle diameter : $0.023\mu$m)

... 85.0 parts

(3.2) Carbon black (b)

(Average particle diameter : $0.3\mu$m)

... 0.5 parts

(3.3) Carbon black (c)

(Average particle diameter : $0.09\text{--}0.25\mu$m)

... 6.8 parts

(4) Abrasive pigment ($CoAl_2O_3$)

(Average particle diameter : 0,45 μm

```
                                          ...   4.2 parts

    (5) Isocyanate hardener              ... 14.4 parts

    (6) Methyl ethyl ketone              ... 65.0 parts

    (7) Toluene                          ...105.2 parts

    (8) Cyclohexane                      ... 13.3 parts;
```

STEP(c): The coating material for the back coat layer was applied on the opposite face of the polyimide film to the one face deposited by the magnetic recording film and dried to form a back coat layer having a thickness of between 0.4μm and 0.5μm with the use of the gravure coating process shown in FIG.2 under the following conditions:

```
    (1) Gravure mesh                     ... #200

    (2) Rotation speed of the gravure roll 5

                                         ... 100rpm

    (3) Tape speed                       ... 5m/min

    (4) Temperature for drying ...   110---150℃; and
```

STEP(d): The applied film was slit to give tape samples (8mm width, 30m length).

The following evaluation test as to running was made on different tape sample obtained in the foregoing example.

[Dynamic frictional coefficient ($\mu$k) by sailing method]

Repeating 50 transits runnings by each tape sample were made with the known sailing instrument having strain meters. Measurements of the dynamic frictional coefficient were made at the first transit and after repeating 50 transits, and the surface of each tape sample was observed. 1 transit means 1 round-trip of the tape. Conditions as to running by the sailing instrument were as follows:

The tape sample (8mm width and 30m length) was wound on and around a post (4$\phi \times$ 25mm length) made of SUS303-stainless steel (having mean surface roughness of Ra 0.2S) at a winding angle of 180° ; tension was 20 gf; and running speed was 8mm/sec.

The table shows the results of the evaluation test.

Table 6

| Example | $\mu$ k | |
|---|---|---|
| | 1st transit | After repeating 50 transits |
| Example 4-1 | 0.12 | 0.12 |

As shown in table 6, the magnetic recording medium of Example 4-1 shows a small dynamic frictional coefficient at the 1st transit, and the small dynamic frictional coefficient has not been changed even after repeating 50 transits, so that it showed improved wear resistance wherein an undesirable exfoliation does not occur.

Thus, it will be understood that the magnetic recording medium having improved runability was also obtained by applying the back coat layer which includes not only a polyurethane (a) having a Tg under the room temperature but also a polyuretane (b) having a Tg of above 60°C on the oppposite face of the non-magnetic substrate to the face covered by the magnetic recording film of Co-Cr in comparison with the afore-mentioned Example 1-1. And the polyurethane (b) has a high degree of polymerization.

**Experiment 5**

[Examples 5-1, 5-2, 5-3 and Comparison example 5-1]

Many examples and comparison examples were carried out by varying the added amount of stearic acid as a lubricant.

These examples and comparison examples were performed in the same way as Example 1-1 except that:

(A) in the STEP(a); the thickness of the polyimide film was changed to 10μm;

(B) in the STEP(a): a CoCr film was made as a first magnetic recording layer satisfying specifics shown in the left column of Table 7 and a CoO film was made as a second magnetic recording layer on the CoCr film satisfying specifics shown in the right column of table 7; and

**Table 7**

| | CoCr film | CoO film |
|---|---|---|
| Temperature of the substrate | 250 °C | 100 °C |
| Deposition rate | (800 Å/sec) 80 nm/sec | (500 Å/sec) 50 nm/sec |
| Incident angle | 55° ——— 30° | 25° ——— 10° |
| Thickness | (20000 Å) 200 nm | (5000 Å) 50 nm |
| Ratio of Component (Atom) | Co:Cr=80:20 | Co:O=50:50 |
| Pressure | (5 × 10$^{-5}$ Torr) 0.006666 Pascal | (1 × 10$^{-4}$ Torr) 0.013332 Pascal |

(C) in the STEP(b): as shown in Table 8, the added amount of stearic acid was changed.

The following evaluation tests were made on different tape samples obtained in the foregoing examples and comparison examples.

[Coefficient of friction μk]

An evaluation test as to sliding was made on the test sheet (8mm width, 50mm length) of tape samples with a Bowden-Tabor Type Friction Tester of the type "DF-PM" manufactured by KYOWAKAIMENKAGAKU Co., Ltd. JAPAN. Measurements of μk and observations of the surface were made by repeating 100 transits sliding of each tape samples by the tester. The conditions as to sliding by the tester were as follows; the tape sample was slidden on a slider (10mm × 10mm) made of SUS303-stainless steel; load weight was 20gf; distance of sliding was 20mm, and sliding speed was 1mm/min. The results of the tests are also shown in Table 8.

[Analysis of the transfer of components in the back coat layer onto the magnetic recording film]

A C/Co ratio is defined as a ratio of a mass of C (carbon) with exists on the surface of the magnetic recording film to a mass of Co (cobalt) which exists on the same. It was obtained by quantitative analysis by ESCA (electron spectroscopy for chemical analysis) of C and Co which exist on the magnetic recording film. That is, when a transfer of a component in the back coat layer onto the magnetic recording film occurs, a mass of C which exists on the surface of the magnetic recording film increases so that the C/Co ratio becomes larger. The change of the C/Co ratio obtained after coating of the back coat layer in comparison with that obtained before coating is also shown in Table 8.

Table 8

| Sample No. | Amount of added lubricant (wt%) | $\mu_k$ after repeating 100 transits | Change of the C/Co ratio |
|---|---|---|---|
| Example 5-1 | 0.11 | 0.11 | No change was observed |
| Example 5-2 | 0.52 | 0.11 | No change was observed |
| Example 5-3 | 0.95 | 0.95 | Increment of 0.1% was observed |
| Comparison example 5-1 | 5.1 | 0.08 | Increment of 3.0% was observed |

From the results shown in table 8, the following conclusions were obtained:

The larger the amount of added lubricant (i.e. stearic acid) became, the more the runability was improved. But when the added amount of the lubricant reached 0.95wt%, an undesirable transfer of a component in the back coat layer onto the magnetic recording film began to occur. Thus, it is preferable to add the lubricant in an amount of less than 1wt%. That is, the lubricant in an amount of less than 1wt% results in improved runability and never has a bad influence on the magnetic recording film.

**Experiment 6**

[Example 6-1]

Tape samples of Example 6-1 were made by the following procedure:

STEP(a): Co-Cr (Co:Cr = 8:2 in ratio of atoms, and it is same as that of the Example 1-1.) was deposited on one face of a 10μm thick polyimide film (having 150μm width) as the non-magnetic substrate 1 by a continuous vapor deposition method to form a 1600Å thick Co-Cr film as the magnetic recording film 2, and the thickness of the Co-Cr film was measured by the SEM;

STEP(b): A coating material for the back coat layer was prepared by mixing and dispersion of the following materials;

(1) Polyurethane

    (1-1) Polyurethane (a) (Mw : 50,000)

              ... 36.0 parts

    (1-2) Polyurethane (b) (Mw : 80,000)

              ... 1.1 parts

(2) Nitrocellulose

    (2.1) Nitrocellulose having a low molecular weight

        (Index of average molecular weight of 1/16

        sec)         ... 25.5 parts

    (2.2) Nitrocellulose having a high molecular weight

        (Index of average molecular weight of 1/2

        sec)         ... 10.6 parts

(3) Carbon black

    (3.1) Carbon black (a)

        (Average particle diameter : $0.023 \mu$m)

           ... 85.0 parts

    (3.2) Carbon black (b)

        (Average particle diameter : $>0.3 \mu$m)

           ... 0.5 parts

    (3.3) Carbon black (c)

        (Average particle diameter : $0.15-1.0 \mu$m)

           ... 2.1 parts

(4) Abrasive pigment ($CoAl_2O_3$)

           ... 4.2 parts

(5) Isocyanate hardener     ... 14.4 parts

(6) Methyl ethyl ketone     ... 65.0 parts

  (7) Toluene     ...105.2 parts

  (8) Cyclohexane     ... 13.3 parts;

STEP(c): The coating material for the back coat layer was applied on the opposite face of the polyimide film to the one face deposited by the magnetic recording film and dried to form a back coat layer having a thickness of between 0.35µm and 0.3µm with the use of the gravure coating process shown in FIG.2 under the following conditions:

```
(1) Gravure mesh                          ... #230

(2) Rotation speed of the gravure roll

                                          ... 100rpm


(3) Tape speed                            ... 5m/min

(4) Temperature for drying  ... 110---120℃; and
```

STEP(d): The applied film was slit to give tape samples (8mm width, 30m length).

The following evaluation test of drawing was made on different video tape samples obtained in the foregoing example 6-1.

[Dynamic frictional coefficient (µk) by the drawing method]

The dynamic frictional coefficient (µk) was measured with the same drawing instrument as used in the Experiment 3. The conditions for measurement were the same as those of the Experiment 3 except that only the tension "P" was changed as shown in Table 9.

Table 9 shows the results of the measurement on tape samples.

Table 9

| Tension(P) | $\mu k$ | |
| --- | --- | --- |
| | 1st transit | After repeating 50 transits |
| 10gf | 0.12 | 0.12 |
| 20gf | 0.10 | 0.11 |
| 40gf | 0.09 | 0.12 |

As shown in Table 9, the magnetic recording medium of Example 6-1 had a low µk and had improved runability. Further, even after repeating 50 transits, the µk changed little, this means that it has an improved wear resistance.

That is, the addition of the carbon particles having a relatively large diameter brought about a more coarsened surface of the back coat layer, so that a magnetic recording medium having more improved runability was obtained.

**Experiment 7**

[Examples 7-1, 7-2, 7-3, 7-4 and 7-5]

Many examples were performed by using carbon particles having different diameters with adding different amounts of the same as shown in Table 10. These examples were carried out in the same way as Example 6-1.

The following evaluation tests were made on different video tape samples obtained in the foregoing examples and comparison examples.

[Surface roughness of the back coat layer and of the magnetic recording film]

The surface roughness of the back coat layer and of the magnetic recording film was measured by a non-contact type three dimensional surface roughness meter "Type TOPO-3D" manufactured by WYKO CO., LTD. U.S.A. Values of respective Rms[*1] and Ra[*1] were obtained as index of surface roughness.

[Observation of the magnetic recording film surface]

The magnetic recording film surface of each tape sample was observed.
The result of observations is defined as follows:
(i) Convex: The magnetic recording film surface was shaped convex;
(ii) Concave: The magnetic recording film surface was shaped concave; and
(iii) Flat: The magnetic recording film surface was shaped flat.
The average particle diameters and the amounts of the carbon particles used in each example and the results of the evaluation tests are shown in Table 10.

[*1] These values are defined in JIS (Japanese Industrial Standard) B-0601.

## Table 10

| Sample No. | Average particle diameter of the carbon particles (μm) | | | Amount of added carbon particles (wt%) | | | The back coat layer surface | | The magnetic recording film surface | | Observation of the magnetic recording film surface |
|---|---|---|---|---|---|---|---|---|---|---|---|
| | (a) | (b) | (c) | (a) | (b) | (c) | Rms (nm) | Ra (nm) | Rms (nm) | Ra (nm) | |
| Example 7-1 | 0.023 | 0.3 | — | 85 | 0.5 | — | 12.0 | 8.91 | 2.8 | 2.45 | Flat |
| Example 7-2 | 0.023 | 0.3 | 0.09 -- 0.25 | 85 | 0.6 | 5.2 | 25.1 | 21.2 | 2.92 | 2.66 | Flat |
| Example 7-3 | 0.023 | 0.3 | 0.09 -- 0.25 | 85 | 0.6 | 5.5 | 27.6 | 23.2 | 2.95 | 2.68 | Convex |
| Example 7-4 | 0.023 | 0.3 | 0.15 -- 1.0 | 85 | 0.6 | 2.0 | 42.0 | 33.3 | 3.21 | 2.89 | Concave |
| Example 7-5 | 0.023 | 0.3 | 0.15 -- 1.0 | 85 | 0.5 | 2.2 | 46.0 | 35.5 | 3.21 | 3.13 | Concave |

(a) > (b) > (c)

From the data shown in Table 10, the following conclusion was obtained:

Mixing of three kinds of carbon particles having different diameters led to large values of Rms and Ra of the back coat layer surface, and it showed a coarsened surface of the same. The coarsened surface of the back coat layer realized improved runability. And further, judging from value of Rms and Ra of the magnetic layer surface, only a little influence of a coarsened surface of the back coat layer upon the magnetic recording film surface owing to the transcription of shape was observed. Judging from observations of the magnetic

27

recording film surface, the convex or concave shape was not so hard that a little influence of curl was obtained. Thus, the magnetic recording medium having a coarsened surface obtained by utilizing 3 kinds of carbon particles was suitable in practical use.

**Experiment 8**

[Examples 8-1 and 8-2 and Comparison examples 8-1, 8-2, 8-3 and 8-4]

In this Experiment 8, tape samples which have only the back coat layer and do not have the magnetic recording film were made by the following procedure:

STEP(a): A coating material for the back coat layer was prepared by mixing and dispersion of the following materials. But the amount of the materials (e.g. polyurethane, hardener, Methyl ethyl ketone, toluene and cyclohexane) were altered in each examples as shown in Table 11.

```
(1) Polyurethane (Mw = 50,000)          ... Altered

(2) Nitrocellulose

     (2.1) Nitrocellulose having a low molecular weight

          (Index of average molecular weight of 1/16

          sec*1)                        ... 25.5 parts

     (2.2) Nitrocellulose having a high molecular

          weight

          (Index of average molecular weight of 1/16

          sec*1)                        ... 10.6 parts

(3) Carbon black

     (3.1) Carbon black (a)

          (Average particle diameter: 0.023 μ m)

                                        ... 85.0 parts

     (3.2) Carbon black (b)

          (Average particle diameter: 0.3 μ m)

                                        ... 0.5 parts

(4) Abrasive pigment (CoAl₂O₃)          ... 4.2 parts

(5) Isocyanate hardener                 ... Altered

(6) Stearic acid                        ... 2.0 parts

(7) Methyl ethyl ketone                 ... Altered

(8) Toluene                             ... Altered

(9) Cyclohexane                         ... Altered
```

28

STEP(b): The coating material for the back coat layer was applied on one face of a 10μm thick polyimide film (150mm width) and dried to form a 0.5μm thick back coat layer with the use of the gravure coating process shown in FIG.2 under the following conditions:

```
(1) Gravure mesh              .... #150

(2) Rotation speed of the gravure roll

                              ... 70 rpm

(3) Tape speed                ... 4.5m/min

(4) Temperature for drying    ... 80---120°C; and
```

STEP(c): The applied film was slit to give tape samples (8mm width, 30 length).
The following evaluation tests were made on different tape samples obtained in the foregoing examples.

[Surface roughness of the back coat layer]

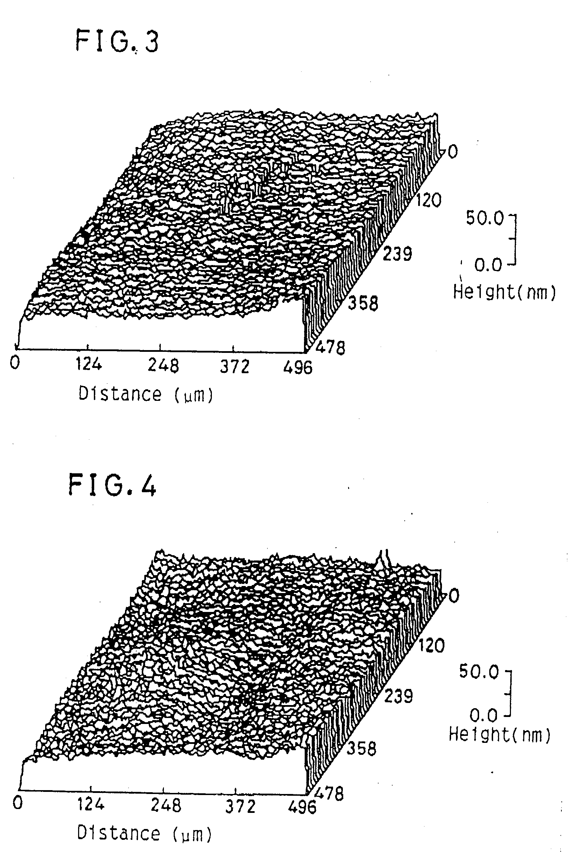

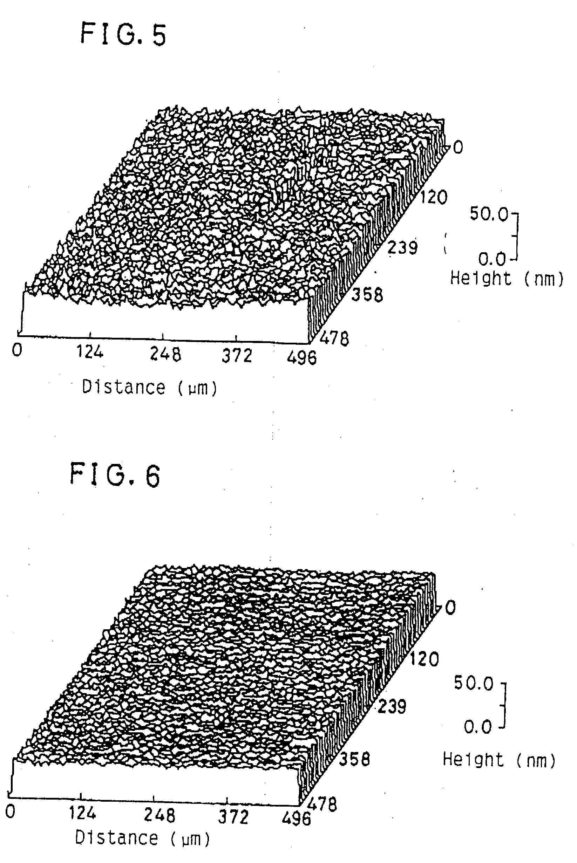

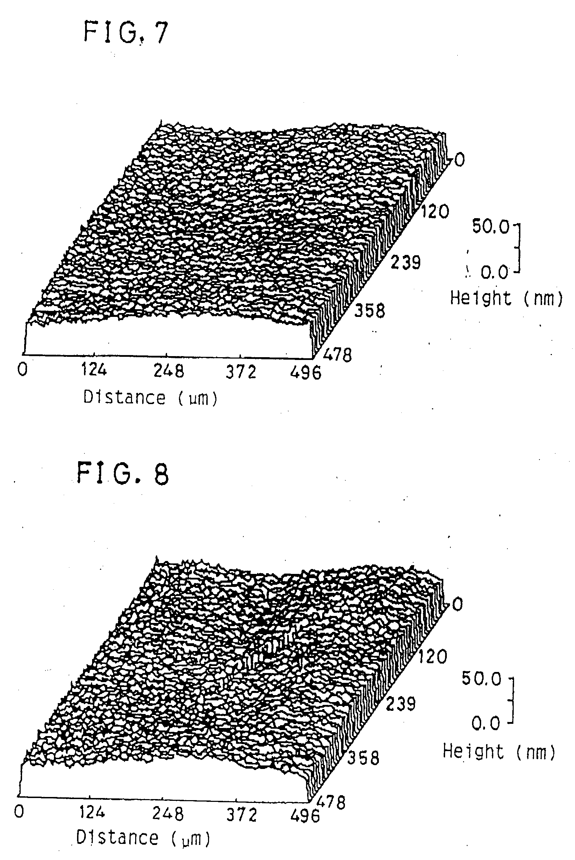

The surface roughness of the back coat layer was measured with the non-contact type three dimensional surface roughness meter "Type TOPO-3D". The result of the measurements are shown in FIGs. 3---8. FIGs. 3, 4, 5, 6, 7 and 8 are enlarged perspective views (with 100 fold magnification) of the back coat layer of respective Comparison examples 8-1, 8-2 and 8-3, and of Example 8-1 and which were obtained with the surface roughness meter. Measured values of indexes (respective Ra[*1], Rms[*1] and P-V[*1]) are also shown in Table 11.

[Young's modulus]

Young's modulus of the tape samples was measured with a Young's modulus meter "TM-7000" (manufactured by SHINKU RIKOU CO LTD. JAPAN).
The results of the tests are shown in Table 11 with altered components of the back coat layer.

*1) These indexes are defined in JIS (Japanese Industrial Standards) B-0601.

Table 11

| Sample No. | Altered components of the back coat layer | | | | | Indexes of surface roughness | | | Young's modulus |
|---|---|---|---|---|---|---|---|---|---|
| | Urethane (wt%) | Hardener (wt%) | Methyl ethyl ketone (wt%) | Toluene (wt%) | Cyclohexane (wt%) | Ra (nm) | Rms (nm) | P – V (nm) | (kg/cm$^2$) |
| Comparison example 8-1 | 1.50 | 3.00 | 20.0 | 24.0 | 3.00 | 8.57 | 10.8 | 88.1 | 670 |
| Comparison example 8-2 | 2.00 | 2.10 | 15.0 | 20.0 | 3.60 | 11.2 | 14.2 | 182.0 | 650 |
| Comparison example 8-3 | 2.50 | 2.50 | 30.0 | 26.0 | 5.00 | 7.12 | 8.99 | 79.2 | 700 |
| Example 8-1 | 3.50 | 3.30 | 18.0 | 30.0 | 4.00 | 3.96 | 4.98 | 46.1 | 770 |
| Example 8-2 | 3.00 | 2.68 | 26.0 | 35.0 | 3.57 | 6.79 | 8.41 | 61.1 | 800 |
| Comparison example 8-4 | 4.00 | 2.51 | 20.0 | 36.0 | 6.00 | 9.24 | 11.6 | 85.5 | 710 |

From the data shown in Table 11, the following conclusion was obtained:

As to the back coat layer formed by using such a range of the proportion of the components shown in the Comparison examples 8-1, 8-2, 8-3 and 8-4, it is judged from the data of surface roughness that sufficient exposure of the inorganic particles was not obtained, and from the data of Young's modulus that sufficiently improved strength was not obtained.

In contrast, as to the back coat layer formed by using such a suitable range of the proportion of the components as shown in the Examples 8-1 and 8-2, a relatively small value for the indexes of surface roughness was obtained. In comparison with the value of Young's modulus (i.e. about 550kg/cm$^2$) of the non-magnetic substrate having no back coat layer, the Young's modulus was increased by about 30%. Further, in the non-magnetic substrate having no back coat layer, Young's modulus of Machine direction (lengthwise direction) and that of Transverse direction (widthwise direction) differ from each other. For example, that of Transverse direction was 535kg/cm$^2$ and that of Machine direction was 585 kg/cm$^2$. In our experiment, the above-mentioned increase of Young's modulus owing to the back coat layer never depended on the direction.

From this results that the condition of dispersion in the coating material and the process of hardening would depend on the range of the proportion of the components. Thus, the back coat layer formed by using such a suitable range of the proportion of components resulted in improved smoothness, dynamic strength and runability of the magnetic recording medium.

**Experiment 9**

[Examples 9-1 and 9-2 and Comparison examples 9-1, 9-2 and 9-3]

In these examples and comparison examples, a filtration of the coating material for the back coat layer was carried out before coating.

These examples were preformed in the same way as that of Example 1-1 except that before the STEP(c), a filtration of the coating material was carried out under the respective conditions shown in Table 12.

As an evaluation test, observation of the back coat layer surface through an optical microscope was made with 100 fold magnification.

The results of the observation are defined as follows;
(i) Good:
Only little particles (e.g. carbon particles, particles of inorganic abrasive pigment and the like) having an unusual diameter were observed.
(ii) Poor:
Some particles having an unusual diameter were observed.
Table 12 shows the result of the observation.

Table 1 2

| Sample No. | Type of filter medium | Filtration pressure (Kg/cm²) | Filtration period[1] (minute) | Result of observation |
|---|---|---|---|---|
| Example 9-1 | Type HT-04XA | 1.5 | 90 | Good |
| Comparison example 9-1 | Type HT-04XA | 2.5 | 30 | Poor |
| Example 9-2 | Type HT-04XA | 2.0 | 60 | Good |
| Comparison example 9-2 | Type HT-06XA | 2.0 | 60 | Poor |
| Comparison example 9-3 | Type HT-30 | 1.5 | 90 | Poor |

*1 In the flow rate of 1000 g/min of the coating material

As to the Examples 9-1 and 9-2, wherein the filter medium type "HT-04XA" (which is manufactured by NIHON ROKI CO., LTD. JAPAN) was used, it has such a performance that particles which pass through the filter have an average particle diameter of 0.4μm and a maximum diameter of 1.0μm. From the observation of the

32

tape samples of these examples, it can be taken that only a small amount of particles (e.g. carbon particles, particles of inorganic abrasive pigment and the like) having an unusual diameter was present.

As to the Comparison examples 9-2 and 9-3, wherein the filter mediums type "HT-06XA" and type "HT-30" were used, they had such a performance that particles which pass through the filter have an average particle diameter relatively larger than that of the filter medium type "HT-04XA" and have a maximum diameter relatively larger than that of the same. Thus, from those observations it can be taken that some particles having an unusual diameter were present.

As to the Comparison example 9-1 wherein a filtration pressure of more than 2.0kg/cm$^2$ and a filtration time of less than 60 minutes were used, though the suitable filter medium of the type "HT-04XA" was used therein, a sufficient effect of the filtration was not obtained. Thus it is necessary to use the suitable filter type under suitable conditions such as a filtration pressure of below 2.0kg/cm$^2$ and a filtration time which is longer than 60 minutes with a flow rate of 1000g/min of the coating material.

**Experiment 10**

[Example 10-1 and Comparison example 10-1]

In the Example 10-1 and Comparison example 10-1, the back coat layer was formed by using the same material as in the Example 8-1. The thickness of the back coat layer was 0.6μm. A 9μm thick polyimide film was used as the non-magnetic substrate 1, and a CoCr film was formed as a first magnetic recording layer satisfying specifics shown in the left column of Table 13 and a CoO film was formed as a second magnetic recording layer satisfying specifics shown in the right column of Table 13, on the CoCr film.

Table 13

| | CoCr film | CoO film |
|---|---|---|
| Temperature of the substrate | 250 °C | 100 °C |
| Deposition rate | (800 Å/sec) 80 nm/sec | (500 Å/sec) 50 nm/sec |
| Incident angle | 75° — 20° | 40° — 10° |
| Thickness | (10000 Å) 100 nm | (600 Å) 60 nm |
| Ratio of Component (Atom) | Co:Cr=75:25 | Co:O=60:40 |
| Pressure | (5 × 10$^{-5}$ Torr) 0,006666 Pascal | (1 × 10$^{-4}$ Torr) 0,013332 Pascal |

In the Example 10-1, before applying the coating material for the back coat layer, a filtration was carried out similarly to the Example 9-2. In contrast, in the Comparison example 10-1, no filtration was effected.

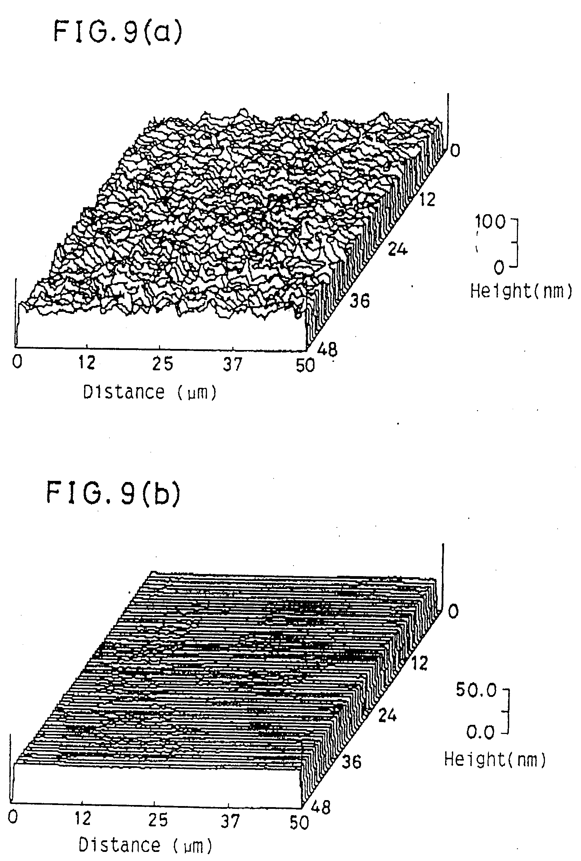

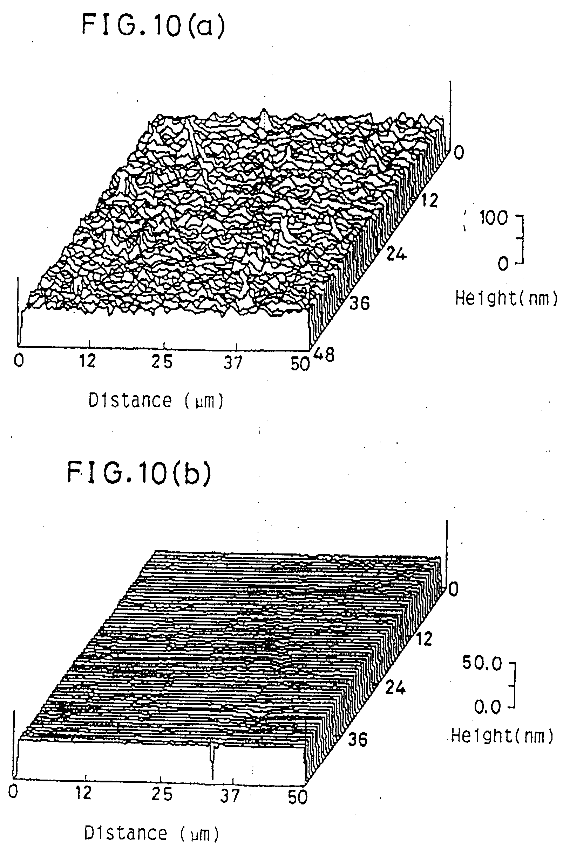

The surface roughness of the back coat layer and the magnetic recording film of respective Example 10-1 and Comparison example 10-1 was measured by the non-contact type three dimensional surface roughness meter "Type TOPO-3D". The results of the measurements are shown in FIGs. 9 and 10. FIGs. 9(a) and 10(a) are enlarged perspective views (with 100 fold magnification) of the back coat layer of respective Example 10-1 and Comparison example 10-1, and FIGs. 9(b) and 10(b) are enlarged perspective views (with 100 fold magnification) of the magnetic recording film of respective Example 10-1 and Comparison example 10-1. As shown in FIG.10(b), a hollow on the surface was observed on the magnetic recording film, and contrary thereto no such hollow on the surface was observed in FIG.9(b). That is, a flat surface of the magnetic recording film was obtained in Example 10-1.

Thus, the suitable filtration step was effective in order to obtain a more improved magnetic recording medium having no transfer, no transcription and good runability.

34

**Experiment 11**

[Examples 11-1, 11-2, 11-3 and 11-4 and Comparison examples 11-1 and 11-2]

Many examples and comparison examples were performed changing the mixing ratio of the isocyanate hardener and changing the characteristics of the carbon powder by a previous surface treatment as shown in Table 14. These examples and comparison examples were performed in the same way as that of Examples 10-1 except that:

(A) in the STEP(a): The CoCr film and the CoO film which are the same as those in the Example 10-1 were formed; and

(B) in the STEP(c): the thickness of the back coat layer was changed to 0.35µm.

In Example 11-1 and 11-2 and Comparison examples 11-1 and 11-2, only the mixing ratio of the hardener was changed. In Example 11-3 and 11-4, a previous treatment of the carbon powder was effected by a silane (group) coupling agent as follows: An ultrasonication was applied to the carbon powder for 5 minutes in a solution wherein 1 wt % n-octyltriethoxysilane was dissolved in isopropyl alcohol.

The following evaluation test was made with different tape samples obtained in the foregoing examples and comparison examples.

[Coefficient of friction µk]

An evaluation test as to sliding was made with test sheet (8mm width, 50mm length) of tape samples with a Bowden-Tabor Type Friction Tester of the type "DF-PM" manufactured by KYOWAKAIMENKAGAKU Co., Ltd. JAPAN. Measurements of µk and observations of the surface were made by repeating 100 transits sliding of each tape sample with the tester. Conditions as to sliding with the tester were as follows: the tape sample was slidden on a slider (10mm × 10mm) made of SUS303-stainless steel; the load weight was 20gf; the distance of sliding was 20mm, and the sliding speed was 1mm/min. The results of the test are also shown in Table 14.

Table 14

| Sample No. | Mixing ratio of the hardener | Whether the ultrasonication on the carbon particles was made or not | Observation of the surface of the back coat layer | $\mu_k$ after repeating 100 transits |
|---|---|---|---|---|
| Example 11-1 | 5.5 wt% | No | No damage was observed | 0.18 |
| Comparison example 11-1 | 3.5 wt% | No | A little damage was observed | 0.23 |
| Comparison example 11-2 | 6.7 wt% | No | Remarkable scratch was observed | 0.15 |
| Example 11-2 | 4.8 wt% | No | No damage was observed | 0.17 |
| Example 11-3 | 5.0 wt% | Yes | No damage was observed | 0.15 |
| Example 11-4 | 5.0 wt% | Yes | No damage was observed | 0.14 |

From the data shown in Table 14, the following conclusion was obtained:

In the Comparison example 11-1 wherein the mixing ratio of the hardener was below 4 wt % and in the Comparison example 11-2 wherein that ratio was above 6 wt %, a damage on the surface was shown in each Comparison examples. Thus these Comparison examples 11-1 and 11-2 had poor wear resistance.

In contrast, in the Examples 11-1 and 11-2 wherein the mixing ratio of the hardener was in the range of between 4 wt % and 6 wt %, a small $\mu_k$ -value was obtained and no damage was observed. Thus, improved scratch resistance was obtained in these Examples 11-1 and 11-2.

In the Examples 11-3 and 11-4 wherein the carbon powder after the ultrasonification treatment was used, $\mu_k$ values became smaller than those of the Examples 11-1 and 11-2 wherein no ultrasonification was used. Thus, a more improved runability was obtained in the Examples 11-3 and 11-4. The magnetic recording medium having a more improved runability was obtained owing to the above-mentioned easy treatment with ultrasonification of the carbon powder.

36

**Experiment 12**

[Examples 12-1, 12-2, 12-3 and 12-4 and Comparison examples 12-1, 12-2, 12-3 and 12-4]

Tape samples which have only the back coat layer and do not have the magnetic recording film in this experiment 12 were made by the following procedure:

STEP(a): A coating material for the back coat layer was prepared by mixing and dispersing of the following materials.

```
(1) Polyurethane (Mw 50,000)           ... 34.0 parts

(2) Nitrocellulose

    (2.1) Nitrocellulose having a low molecular weight

          (Index of average molecular weight of 1/16

          sec)                         ... 24.5 parts

    (2.2) Nitrocellulose having a high molecular

          weight

          (Index of average molecular weight of 1/2

          sec)                         ... 11.6 parts

(3) Carbon black

    (3.1) Carbon black (a)

          (Average particle diameter : 0.023μm)

                                       ... 85.0 parts

    (3.2) Carbon black (b)

          (Average particle diameter : 0.3μm)

                                       ...  0.5 parts

(4) Abrasive pigment (CoAl₂O₃)         ...  4.2 parts

(5) Isocyanate hardener               ... 14.4 parts

(6) Stearic acid                      ...  1.0 parts

(7) Methyl ethyl ketone               ... 65.0 parts

(8) Toluene                           ...105.2 parts

    (9) Cyclohexane                   ... 13.3 parts;
```

STEP(b): The coating material for the back coat layer was applied on one face of a 9μm thick polyimide film (150mm width) with the use of a test coater type "CR3-250" which is manufactured by YASUI SEIKI CO., LTD. JAPAN. The test coater utilizes the gravure coating process shown in FIG.2. In the test coater, a gravure roll of oblique line type precision roll having 180 mesh (#180) was used, and the temperature for drying was kept at 120°C constantly. The pressure of the blade was measured by a conventional spring scale. Some process conditions for applying the coating material were changed in each example and comparison example as shown in Table 15; and

STEP (c): The applied film was slit to give tape samples (8mm width × 3m length).

The following evaluation tests were made on the different tape samples obtained in the foregoing examples.

[Thickness of the back coat layer]

The thickness of the back coat layer was measured by a conventional measuring machine.

[Surface roughness of the back coat layer]

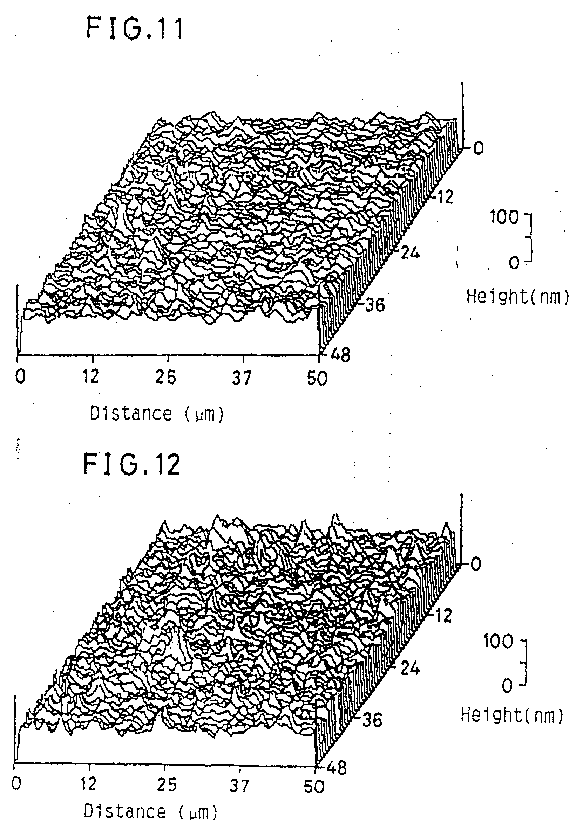

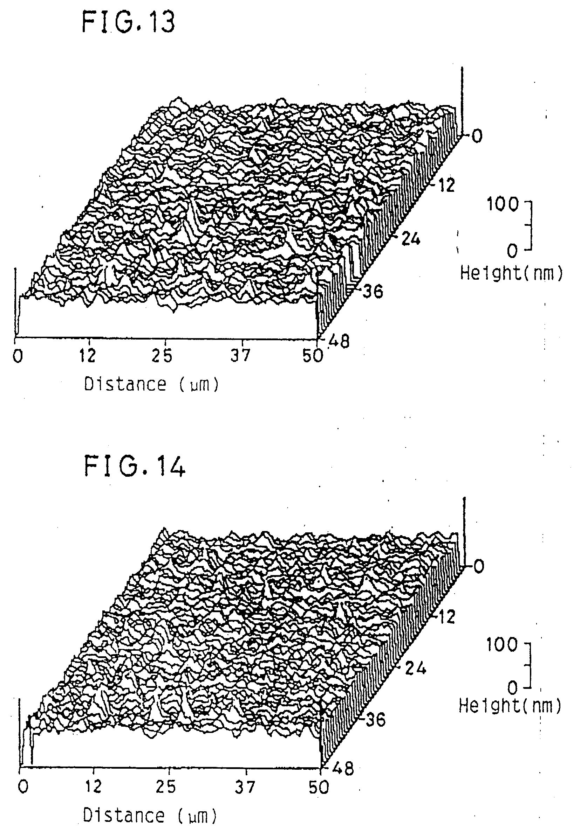

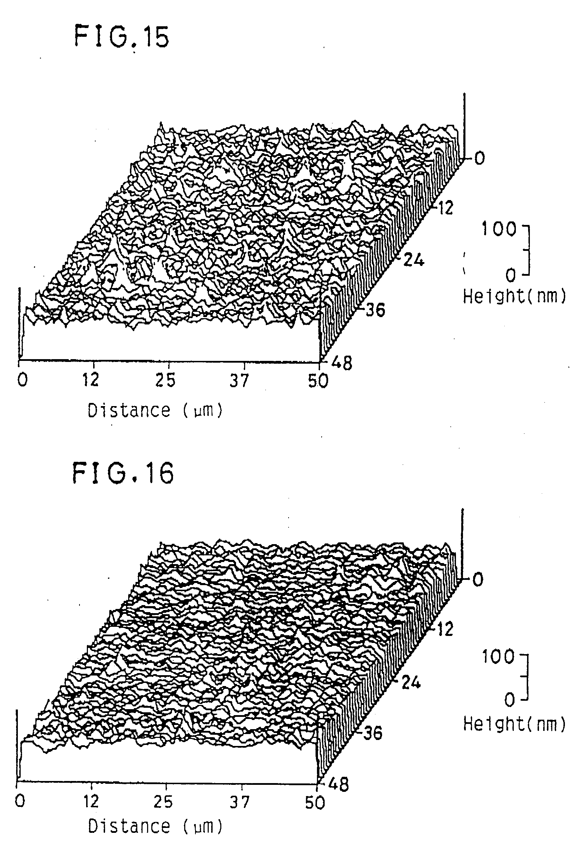

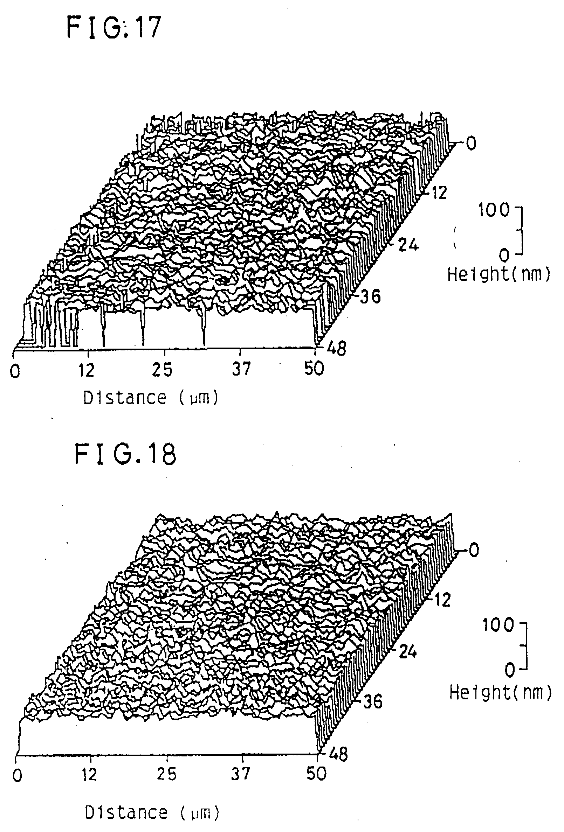

The surface roughness of the back coat layer was measured by the non-contact type three dimensional surface roughness meter "Type TOPO-3D". The result of the measurements are shown in FIGs. 11---18. FIGs. 11, 12, 13, 14, 15, 16, 17 and 18 are enlarged perspective views(with 100 fold magnification) of the back coat layer of respective Example 12-1, Comparison example 12-1, Comparison example 12-2, Example 12-2, Comparison example 12-3, Example 12-3, Comparison example 12-4 and Example 12-4 which were obtained by the surface roughness meter. Measured values of indexes (respective Ra[*1], Rms[*1] and P-V[*1]) are also shown in Table 15.

The surface roughness of the back coat layer was also observed by an optical microscope with 200 fold magnification.

[*1] These indexes are defined in JIS (Japanese Industrial Standards K-0611)

Table 15

| Sample No. | Pressure of the blade (gf) | Depth of the gravure roll (μm) | Tape speed (m/min) | Rotation speed of the gravure roll (rpm) | Thickness of the back coat layer (μm) | Ra (nm) | Rms (nm) | P-V (nm) |
|---|---|---|---|---|---|---|---|---|
| Example 12-1 | 0.5 | 450 | 5.0 | 100 | 0.6 | 17.1 | 22.1 | 220 |
| Comparison example 12-1 | 0.3 | 300 | 6.0 | 105 | 0.3 | 20.3 | 26.8 | 261 |
| Comparison example 12-2 | 1.2 | 600 | 5.5 | 110 | 0.8 | 15.8 | 20.8 | 273 |
| Example 12-2 | 0.5 | 350 | 4.5 | 200 | 0.4 | 15.6 | 20.3 | 209 |
| Comparison example 12-3 | 0.8 | 200 | 5.0 | 100 | 0.15 | 16.8 | 22.3 | 245 |
| Example 12-3 | 0.5 | 450 | 4.5 | 70 | 0.7 | 13.2 | 17.1 | 156 |
| Comparison example 12-4 | 3.0 | 600 | 5.0 | 100 | 0.9 | 15.4 | 19.4 | 179 |
| Example 12-4 | 0.5 | 450 | 4.0 | 60 | 0.6 | 16.8 | 21.1 | 208 |

From the data shown in Table 15 and from FIGs. 11---18, the following conclusion was obtained:

The Examples 12-1, 12-2, 13-3 and 12-4 were performed under the following conditions:

The immersing depth of the roll was below 450μm,

the tape speed was in the range of from 4.5 m/min to 5 m/min and

the rotating speed of the roll was in the range of from 65 rpm to 105 rpm.

These Examples showed no transcription of the gravure roll and uniformity of coating on the back layer surface. Thus, a relatively uniform-finished surface was obtained.

The values of Ra, Rms and P-V of each Example were studied comparatively; the Example 12-3 which was performed under the following conditions: the immersing depth of the roll was below 450μm, the tape

speed was 4.5 m/min and the rotation speed of the Roll was 70 rpm, showed the smallest values for indicating surface roughness. Additionally, from the result of observation of the back coat layer surface of the Example 12-3 through the optical microscope, improved smoothness thereof was confirmed.

Thus, when the back coat layer was formed under the above-mentioned conditions, an improved magnetic recording medium, which has no undesirable transcription onto the magnetic recording film surface, was obtained.

**Experiment 13**

[Examples 13-1, 13-2 and 13-3]

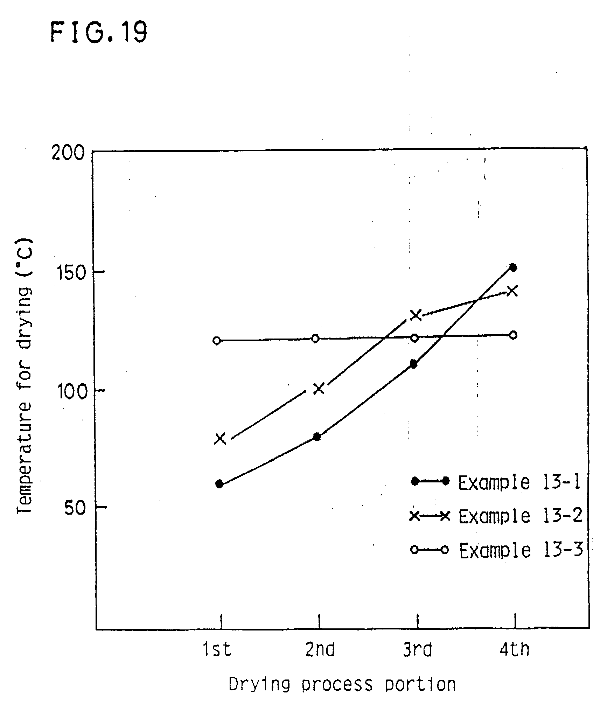

In this experiment 13, tape samples which have only the back coat layer and do not have the magnetic recording film were made in the same way as that of Example 12-3 except that: in the STEP(b) the temperature for drying was changed in respective examples as shown in FIG.19. The temperature for drying can be controlled by utilizing the gradual drying process shown in FIG.2. As mentioned above, the drying process was carried out in continuously arranged four portions (i.e. first 11, second 12, third 13 and fourth portion 14) in FIG.2. In the actual apparatus for drying, there was no actual wall or the like for dividing these portions. But, in each portion, a set of a heater and of a controller (including an electric thermometer) therefor was used in order to keep a constant temperature in the portion. The set of a heater and of a controller is not shown in FIG.2. The control of the temperature for drying is effected by setting temperature in each portion. The objective temperature in each of the four portions of respective Examples 13-1, 13-2 and 13-3 is shown in FIG.19. That is, in Examples 13-1 and 13-2, the respective temperature for drying in each portion is set in a manner that the temperature becomes gradually higher in the regular order of the portions.

The evaluation tests which were as same as those of the Experiment 12 were made with different tape samples obtained in the foregoing examples.

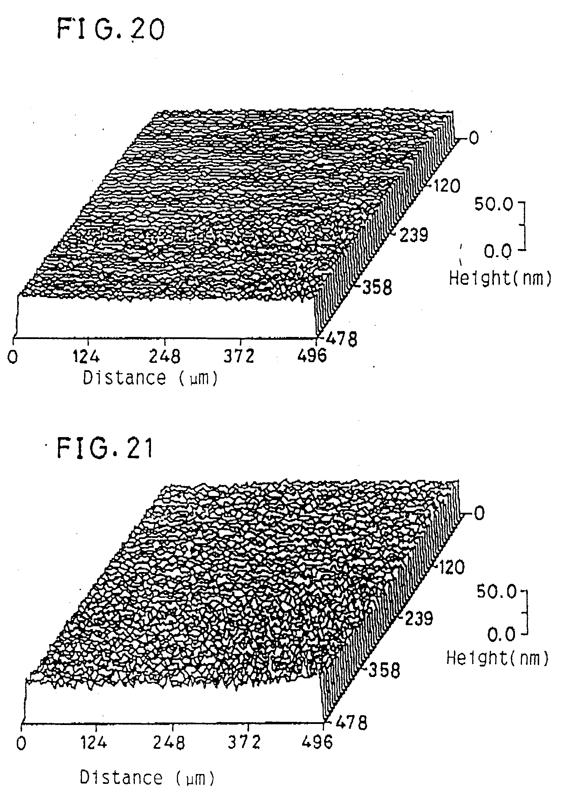

FIGs. 20, 21 and 22 are enlarged perspective views (with 100 fold magnification) of the back coat layer of respective Examples 13-1, 13-2 and 13-3.

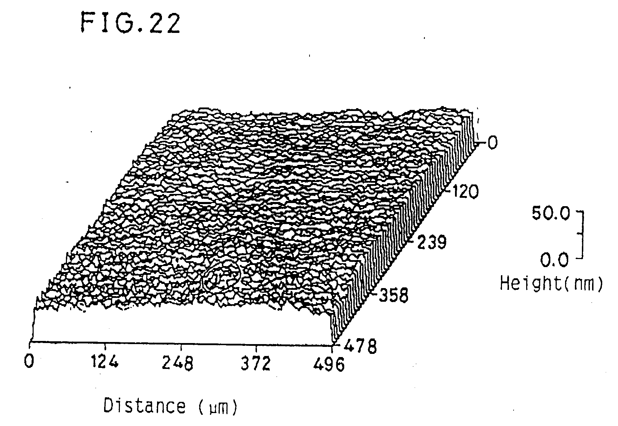

In case, the temperature for drying was set gradually in the respective four portions from a low temperature of about 60°C to a high temperature of about 150°C as shown by the Example 13-1 in FIG.19, a more solid back coat layer was obtained as shown in FIG.20 in comparison with FIGs. 21 and 22. The above-mentioned gradual control of the temperature for drying would mitigate a high evaporation rate of the solvent used in the applied coating material.

**Experiment 14**

[Example 14-1]

The Example 14-1 was performed with the same procedure as that of Example 1-1 except that:
(A) in the STEP(a): a CoCr film was formed as a first magnetic recording layer satisfying specifics as shown in the left column of Table 16 and a CoO film was formed as a second magnetic recording layer satisfying specifics as shown in the right column of Table 16 on the CoCr film; and
(B) in the STEP(c): a 0.6μm thick back coat layer was formed in the same way as that of Example 13-1.

Table 16

| | CoCr film | CoO film |
|---|---|---|
| Temperature of the substrate | 250 °C | 100 °C |
| Deposition rate | (800 Å/sec) 80 nm/sec | (400 Å/sec) 40 nm/sec |
| Incident angle | 75° --- 30° | 40° --- 10° |
| Thickness | (10000 Å) 100 nm | (600 Å) 60 nm |
| Ratio of Component (Atom) | Co:Cr=80:20 | Co:O=50:50 |
| Pressure | (5 × 10⁻⁵ Torr) 0,006666 Pascal | (1 × 10⁻⁴ Torr) 0,0133322 Pascal |

[Comparison example 14-1]

The Comparison example 14-1 was performed with the same procedure as that of Example 14-1 except that: in the STEP(c): a 0.6μm thick back coat layer was formed in the same way as that of Comparison example 12-1.

Thus, in the Comparison example 14-1, the back coat layer was made under bad conditions.

The following evaluation test as to the electromagnetic transducing characteristic was made on video tape samples obtained in the foregoing example and comparison example.

[Flatness of envelop]

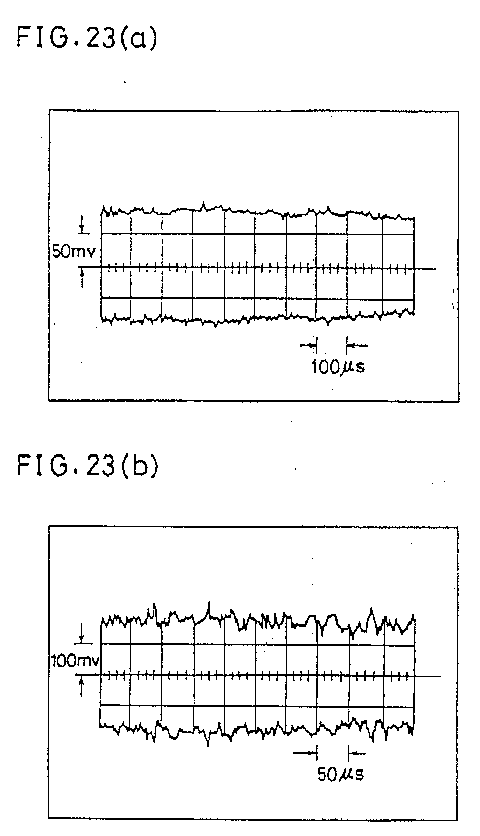

A signal of 7MHz was recorded on each video tape example by using the 8mm system VTR and the wave of the reproduced signal was observed by using an oscilloscope. FIG.23(a) shows an observed wave form of the Example 14-1, and FIG.23(b) shows that of the Comparison example 14-1. From FIGs. 23(a) and 23(b), it can be taken that the flatness of the envelop of the Example 14-1 was more flat than that of the Comparison example 14-1. Thus, a magnetic recording medium having no undesirable transcription and suitable for actual use was obtained.

As is evident from the results as mentioned above, the back coat layer of the present invention realizes a magnetic recording medium which has a uniform magnetic recording film having a wide area and having no transcription of shape.

**Experiment 15**

[Example 15-1]

In the Example 15-1, the back coat layer of video tape samples was formed by using the same material as that of the Example 8-1. A 0.6µmm thick back coat layer was formed under the conditions as shown in Table 17. In Table 17, the temperature for drying was set gradually in each portion similar to the Example 13-1, an annealing at 60°C was carried out for 12 hour after drying in order to accelerate hardening. A magnetic recording film consisting of two magnetic layers which is the same as that of the Example 14-1, was applied.

[Example 15-2]

Video tape samples of this Example 15-2 were made with the same procedure as that of the Example 15-1 except that: the range of the temperature for drying was changed and no annealing was effected as shown in Table 17.

[Example 15-3]

Video tape samples of this Example 15-3 were made with the same procedure as that of the Example 15-1 except that: the range of the temperature for drying was changed, the condition of annealing was changed and the magnetic recording film consisted of one layer which is the same as the CoO film of the Example 14-1 as shown in Table 17.

[Example 15-4]

Video tape samples of this Example 15-4 were made with the same procedure as that of the Example 15-1 except that: the range for drying was changed, the condition of annealing was changed and the magnetic recording film consisted of one layer which is the same as the CoCr film of the Example 14-1 as shown in Table 17.

[Example 15-5]

Video tape samples of this Example 15-5 were made wih the same procedure as that of the Example 15-1 except that: the range for drying was changed and no annealing was effected as shown in Table 17.

The following evaluation tests were made with the different video tape samples obtained in the foregoing examples.

[Analysis of transfer of component in the back coat layer onto the magnetic recording film]

A C/Co ratio is defined as a ratio of a mass of C (carbon) which exists on the surface of the magnetic recording film to a mass of Co(cobalt) which exists on the same. It was obtained by quantitative analysis of ESCA (electron spectroscopy for chemical analysis) of C and Co which exist on the magnetic recording film. That is, when a transfer of component in the back coat layer onto the magnetic recording film occurs, the mass of C which exists on the surface of the magnetic recording film increases so that the C/Co ratio becomes large. The change of the C/Co ratio obtained after coating of the back coat layer in comparison with that obtained before coating is shown in Table 17.

[Cylinder load]

The cylinder load was measured in the same way as that of the Experiment 3. The results of measurement are shown in Table 17.

[Head wear]

After repeating 50 times of running (in a playback state) of each video tape sample by using the same VTR as in the Experiment 14, head wear at the amorphous part was measured by a touching probe type roughness meter type "ET-30HK" (having 0.1μm stylus of sapphire) which is manufactured by KOSAKA LABORATORY CO LTD. JAPAN. The results of the measurement are shown in Table 17.

Table 17

| Sample No. | Temperature for drying (°C) | Condition of anealing: Temperature (°C) and period(Hr) | Configuration of the magnetic film | Change of the C/Co ratio | Cylinder load(mV) | Head wear (Å) |
|---|---|---|---|---|---|---|
| Example 15-1 | 80-120 | 60°C and 12Hr | CoO/CoCr | No change was observed | 43 | Below 40 |
| Example 15-2 | 110-150 | No anealing was made | CoO/CoCr | No change was observed | 44 | 50---60 |
| Example 15-3 | 80-100 | 80°C and 10Hr | CoO | Increment of 1% was observed | 42 | 20---30 |
| Example 15-4 | 90-110 | 100°C and 5Hr | CoCr | No change was observed | 50 | 30---40 |
| Example 15-5 | 90-150 | No anealing was made | CoCr | No change was observed | 55 | Below 10 |

43

From the data shown in Table 17, the following conclusion was obtained:

Even when the back coat layer of the present invention was dried at a relatively low temperature i.e. 80°C, an undesirable transfer of component in the back coat layer onto the magnetic recording film did not occur, the cylinder load was below 50mV and the head wear was controlled to be below 60Å. Thus, a magnetic recording medium having improved runability was obtained.

Although the present invention has been described in terms of the presently preferred embodiments, it is to be understood that such disclosure is not to be interpreted as limiting.

## Claims

1. A magnetic recording medium comprising:

   a non-magnetic substrate;

   a magnetic recording film formed on one face of said non-magnetic substrate, said magnetic recording film comprising one member selected from the group consisting of i) an alloy of the Co group and ii) an oxidized metal including said alloy of the Co group;

   a back coat layer formed on a face of said non-magnetic substrate opposite to said face on which said magnetic recording film is formed, said back coat layer comprising

   a first polyurethane having a Tg (glass transition temperature) of about 10°C and a molecular weight of from 45,000 to 52,000,

   an isocyanate hardener,

   a carbon powder comprising at least a first carbon powder having an average particle diameter above 0,3 μm and a second carbon powder having an average particle diameter of about 0,02 μm;

   an inorganic abrasive pigment including alumina powder, which is an amorphous mixture of alumina and CoO, and a nitrocellulose component substantially comprising a first nitrocellulose having a first molecular weight and a second nitrocellulose having a second molecular weight larger than said first molecular weight.

2. A magnetic recording medium in accordance with claim 1, wherein;

   said first polyurethane includes minor amounts of a second polyurethane having a Tg above 60°C and having a high degree of polymerization.

3. A magnetic recording medium in accordance with claim 1, said back coat layer further comprising:

   a lubricant of less than 1% by weight as a coating material for said back coat layer.

4. A magnetic recording medium in accordance with claim 1, said carbon powder further comprising:

   a third carbon powder having an average particle diameter in the range of 0,09μm to 0,25μm.

5. A magnetic recording medium in accordance with claim 1, said carbon powder further comprising:

   a third carbon powder having an average particle diameter in the range of 0,15μm to 1,0μm.

6. A magnetic recording medium in accordance with claim 1 wherein said back coat layer has a thickness above 0,15μm.

7. A magnetic recording medium in accordance with claim 1 wherein;

   said alumina powder has an average particle diameter of about 0,5μm.

8. A method for making a magnetic recording medium in accordance with claim 1 comprising:

   a step of forming a magnetic recording film on one face of a non-magnetic substrate; and

   a step of forming a back coat layer by coating a coating material comprising a polyurethane having a Tg of about 10°C, an isocyanate hardener, carbon powder, an inorganic abrasive pigment and a solvent, on the opposite face of said non-magnetic substrate to said one face covered by said magnetic recording film.

9. A method for making a magnetic recording medium in accordance with claim 8 wherein;

   said polyurethane content of said coating material is in the range of from 2 wt% to 3 wt%,

   said isocyanate hardener content of said coating material is in the range of from 2 wt% to 3,5 wt%,

   the methyl ethyl ketone content of said coating material is in the range of from 15 wt% to 18 wt%, said methyl ethyl ketone being one of said solvent,

the toluene content of said coating material is in the range of from 24 wt% to 30 wt%, said toluene being one of said solvent, and

the cyclohexane content of said coating material is in the range of from 3 wt% to 5 wt%, said cyclohexane being one of said solvent.

10. A method for making a magnetic recording medium in accordance with claim 8 wherein;

filtration is made on said coating material in the following condition:

a filter medium having a performance such that particles which pass through said filter have an average particle diameter of $0.4\mu m$ and a maximum particle diameter of $1.0\mu m$ is used,

the filtration pressure is below 2 kg/cm$^2$, and

the filtration period is longer than 60 minutes in the flow rate of 1000 g/min of said coating material.

11. A method for making a magnetic recording medium in accordance with claim 8 wherein;

said carbon powder is treated with a silane (group) coupling agent.

12. A method for making a magnetic recording medium in accordance with claim 8 wherein;

said step of forming a back coat layer is a gravure coating process having a coating material transfer process and a drying process, in said coating material transfer process, a (gravure) roll having an immersing depth of the roll below $450\mu m$ is rotated at a rotating speed in the range of from 65 rpm to 105 rpm, a blade holds down said (gravure) roll at a pressure of below 0,5g and said non-magnetic substrate runs at a speed in the range of from 4,5 m/min to 5 m/min.

13. A method for making a magnetic recording medium in accordance with claim 12 wherein;

said gravure roll is rotated at 70 rpm and said non-magnetic substrate runs at 4.5 m/min.

14. A method for making a magnetic recording medium in accordance with claim 12 wherein;

in said drying process, the drying temperature is set in the range of from 60°C to 150°C.

15. A method for making a magnetic recording medium in accordance with claim 12 wherein;

said drying process is carried out in a continuous plural portions, and the respective temperatures for drying in each portions are set in a manner such that the temperature becomes gradually higher in regular order.

16. A method for making a magnetic recording medium in accordance with claim 8 wherein;

said method further comprises:

a step of annealing at a temperature above 60°C after said step of forming the back coat layer.


**Patentansprüche**

1. Ein magnetisches Speichermedium, welches die folgenden Bestandteile beinhaltet:

ein nichtmagnetisches Substrat;

einen magnetischen Speicherfilm, der auf einer Seite des besagten, nichtmagnetischen Substrats erzeugt wird, wobei der besagte, magnetische Speicherfilm eine Komponente enthält, welche aus der nachfolgenden Gruppe ausgewählt wird, die folgende Komponenten umfaßt:

(i) eine aus einem Element der Co-Gruppe gebildete Legierung, und

(ii) ein oxidiertes Metall, welches die besagte Legierung einschließt, die aus einem Element der Co-Gruppe gebildet worden ist;

eine rückseitige Bedeckungsschicht, die auf derjenigen Seite des besagten, nichtmagnetischen Substrats erzeugt wird, die der besagten Seite gegenüberliegt, auf welcher der besagte, magnetische Speicherfilm erzeugt worden ist, wobei die besagte, rückseitige Bedeckungsschicht die nachfolgend aufgeführten Bestandteile umfasst:

ein erstes Polyurethan, welches einen Tg-Wert (Glasübergangstemperatur) von etwa 10 °C und ein Molekulargewicht zwischen 45 000 und 52 000 aufweist, einen Isocyanathärter,

ein Kohlenstoffpulver, welches mindestens ein erstes Kohlenstoffpulver mit einem mittleren Teilchendurchmesser oberhalb von $0,3\ \mu m$ und ein zweites Kohlenstoffpulver mit einem mittleren Teilchendurchmesser von etwa $0,02\ \mu m$ umfasst;

ein anorganisches Schleifpigment, welches ein Aluminiumoxidpulver umfasst, das ein amorphes Gemisch von Aluminiumoxid und CoO darstellt, und einen Nitrozellulosebestandteil, der im wesentlichen eine erste Nitrozellulosesorte mit einem ersten Molekulargewicht und eine zweite Nitrozellulosesorte mit einem zweiten Molekulargewicht umfasst, welches zweite Molekulargewicht höher als das besagte erste Molekulargewicht ist.

2. Ein magnetisches Speichermedium gemäß Anspruch 1, wobei das besagte erste Polyurethan auch kleinere Mengen eines zweiten Polyurethans umfasst, welches einen Tg-Wert oberhalb von 60 °C und einen hohen Polymerisationsgrad aufweist.

3. Ein magnetisches Speichermedium gemäß Anspruch 1, wobei die besagte, rückseitige Bedeckungsschicht zusätzlich folgendes umfasst:

einen Anteil von weniger als 1 Gewichtsprozent eines Schmiermittels, das als Beschichtungsmaterial der rückseitigen Bedeckungsschicht dient.

4. Ein magnetisches Speichermedium gemäß Anspruch 1, wobei das besagte Kohlenstoffpulver zusätzlich folgendes umfasst:

ein drittes Kohlenstoffpulver mit einem mittleren Teilchendurchmesser im Bereich von 0,09 μm bis 0,25 μm.

5. Ein magnetisches Speichermedium gemäß Anspruch 1, wobei das besagte Kohlenstoffpulver zusätzlich folgendes umfasst:

ein drittes Kohlenstoffpulver mit einem mittleren Teilchendurchmesser im Bereich von 0,15 μm bis 1,0 μm.

6. Ein magnetisches Speichermedium gemäß Anspruch 1, wobei die besagte, rückseitige Bedeckungsschicht eine Dicke oberhalb von 0,15 μm aufweist.

7. Ein magnetisches Speichermedium gemäß Anspruch 1, wobei das besagte Aluminiumoxidpulver einen mittleren Teilchendurchmesser von etwa 0,5 μm aufweist.

8. Eine Methode zur Herstellung eines magnetischen Speichermediums gemäß Anspruch 1, die folgende Schritte umfasst:

einen Schritt des Erzeugens eines magnetischen Speicherfilms auf einer Seite eines nichtmagnetischen Substrats; und

einen Schritt des Erzeugens einer rückseitigen Bedeckungsschicht durch Beschichten von derjenigen Seite des besagten, nichtmagnetischen Substrats, die der besagten einen Seite gegenüberliegt, welche mit dem besagten, magnetischen Speicherfilm bedeckt ist, mit einem Beschichtungsmaterial, welches ein Polyurethan mit einem Tg-Wert von etwa 10 °C, einen Isocyanathärter, Kohlenstoffpulver, ein anorganisches Schleifpigment und ein Lösungsmittel enthält.

9. Eine Methode zur Herstellung eines magnetischen Speichermediums gemäß Anspruch 8, wobei

der besagte Polyurethangehalt des besagten Beschichtungsmaterials im Bereich von 2 bis 3 Gewichtsprozent liegt,

der besagte Isocyanathärtergehalt des besagten Beschichtungsmaterials im Bereich von 2 bis 3,5 Gewichtsprozent liegt,

der Methylethylketongehalt des besagten Beschichtungsmaterials im Bereich von 15 bis 18 Gewichtsprozent liegt, wobei das besagte Methylethylketon eines der besagten Lösungsmittel darstellt,

der Toluolgehalt des besagten Beschichtungsmaterials im Bereich von 24 bis 30 Gewichtsprozent liegt, wobei das besagte Toluol eines der besagten Lösungsmittel darstellt, und

der Cyclohexangehalt des besagten Beschichtungsmaterials im Bereich von 3 bis 5 Gewichtsprozent liegt, wobei das besagte Cyclohexan eines der besagten Lösungsmittel darstellt.

10. Eine Methode zur Herstellung eines magnetischen Speichermediums gemäß Anspruch 8, wobei

das besagte Beschichtungsmaterial einer Filtration unter den folgenden Bedingungen unterzogen wird:

es wird ein Filtermedium mit einem Leistungsprofil verwendet, welches dahingehend ausgelegt ist, daß die Teilchen, die den besagten Filter passieren, einen mittleren Teilchendurchmesser von 0,4 μm und einen maximalen Teilchendurchmesser von 1,0 μm aufweisen,

der Filtrationsdruck beträgt weniger als 2 kg/cm$^2$, und

bei einer Fließgeschwindigkeit des Beschichtungsmaterials von 1000 g/min beträgt die Filtrationsdauer mehr als 60 Minuten.

11. Eine Methode zur Herstellung eines magnetischen Speichermediums gemäß Anspruch 8, wobei das besagte Kohlenstoffpulver mit einem Silan-(-gruppen-)-kopplungsreagens behandelt wird.

12. Eine Methode zur Herstellung eines magnetischen Speichermediums gemäß Anspruch 8, wobei der besagte Schritt des Erzeugens einer rückseitigen Bedeckungsschicht einem Rasterbeschichtungsverfahren entspricht, welches aus einem Verfahrensschritt zur Übertragung des Beschichtungsmaterials und einem Trocknungsverfahrensschritt besteht, wobei im Rahmen des besagten Verfahrensschritts zur Übertragung des Beschichtungsmaterials eine (Raster-)walze, welche eine Walzeneintauchtiefe von weniger als 450 μm aufweist, mit einer Rotationsgeschwindigkeit im Bereich von 65 UpM bis 105 UpM in Rotation versetzt wird, wobei eine Rakel mit einem Druck von weniger als 0,5 g die besagte (Raster-)walze niederhält und wobei das besagte, nichtmagnetische Substrat mit einer Geschwindigkeit im Bereich von 4,5 m/min bis 5 m/min weitertransportiert wird.

13. Eine Methode zur Herstellung eines magnetischen Speichermediums gemäß Anspruch 12, wobei die besagte Rasterwalze mit einer Geschwindigkeit von 70 UpM in Rotation versetzt und das besagte, nichtmagnetische Substrat mit einer Geschwindigkeit von 4,5 m/min weitertransportiert wird.

14. Eine Methode zur Herstellung eines magnetischen Speichermediums gemäß Anspruch 12, wobei im Rahmen des besagten Trocknungsverfahrensschritts die Trocknungstemperatur innerhalb eines Bereichs von 60 °C bis 150 °C eingestellt wird.

15. Eine Methode zur Herstellung eines magnetischen Speichermediums gemäß Anspruch 12, wobei der besagte Trocknungsverfahrensschritt im Rahmen mehrerer, aufeinanderfolgender Abschnitte durchgeführt wird, und wobei die entsprechenden Trocknungstemperaturen innerhalb eines jeden Abschnitts in solcher Weise eingestellt werden, daß die Temperatur im Zuge einer normalen Abfolge der Abschnitte stufenweise ansteigt.

16. Eine Methode zur Herstellung eines magnetischen Speichermediums gemäß Anspruch 8, wobei die besagte Methode zusätzlich folgenden Schritt umfasst:
einen Temperungsschritt bei einer Temperatur oberhalb von 60 °C im Anschluß an den besagten Schritt des Erzeugens der rückseitigen Bedeckungsschicht.

**Revendications**

1. Support d'enregistrement magnétique comprenant :
un substrat non magnétique,
un film d'enregistrement magnétique formé sur une face dudit substrat non magnétique, ledit film d'enregistrement magnétique comprenant un élément sélectionné dans le groupe qui est constitué de (i) un alliage du groupe Co et (ii) un métal oxydé comportant ledit alliage du groupe Co,
une couche de revêtement arrière formée sur une face dudit substrat non magnétique opposée à ladite face sur laquelle ledit film d'enregistrement magnétique est formé, ladite couche de revêtement arrière comprenant
un premier polyuréthanne ayant un Tg (température de transition vitreuse) d'environ 10°C et un poids moléculaire situé entre 45 000 à 52 000,
un durcisseur d'isocyanate,
une poudre de carbone comprenant au moins une première poudre de carbone ayant un diamètre moyen de particule au-dessus de 0,3 μm et une seconde poudre de carbone ayant une diamètre moyen de particule d'environ 0,02 μm,
un pigment abrasif inorganique comportant de la poudre d'alumine qui est un mélange amorphe d'alumine et de CoO et
un composant de nitrocellulose comprenant sensiblement une première nitrocellulose présentant un premier poids moléculaire à une seconde nitrocellulose présentant un second poids moléculaire plus grand que ledit premier poids moléculaire.

2. Support d'enregistrement magnétique selon la revendication 1, dans lequel :
ledit premier polyuréthanne comporte des quantités mineures d'un second polyuréthanne ayant un Tg au-dessus de 60°C et ayant un degré élevé de polymérisation.

3. Support d'enregistrement magnétique selon la revendication 1, ladite couche de revêtement arrière comprenant de plus :
un lubrifiant ayant moins d'1 % en poids en tant que matériau de revêtement pour ladite couche de revêtement arrière.

4. Support d'enregistrement magnétique selon la revendication 1, ladite poudre de carbone comprenant de plus :
une troisième poudre de carbone présentant un diamètre moyen de particule dans la plage située entre 0,09 μm à 0,25 μm.

5. Support d'enregistrement magnétique selon la revendication 1, ladite poudre de carbone comprenant de plus :
une troisième poudre de carbone présentant un diamètre moyen de particule dans la plage située entre 0,15 μm et 1,0 μm.

6. Support d'enregistrement magnétique selon la revendication 1, dans lequel la couche de revêtement arrière présente une épaisseur au-dessus de 0,15 μm.

7. Support d'enregistrement magnétique selon la revendication 1, dans lequel ,
ladite poudre d'alumine présente un diamètre moyen de particule d'environ 0,5 μm.

8. Procédé pour fabriquer un support d'enregistrement magnétique selon la revendication 1, comprenant :
une étape consistant à former un film d'enregistrement magnétique sur une face à substrat non magnétique, et
une étape consistant à former une couche de revêtement arrière par le dépôt d'un matériau de revêtement comprenant un polyuréthanne ayant un Tg d'environ 10°C, un durcisseur d'isocyanate, de la poudre de carbone, un pigment abrasif inorganique et un solvant sur la face opposée dudit substrat non magnétique par rapport à ladite face recouverte par ledit film d'enregistrement magnétique.

9. Procédé pour fabriquer un support d'enregistrement magnétique selon la revendication 8, dans lequel :
ladite teneur en polyuréthanne dudit matériau de revêtement est dans la plage située entre 2 % en poids à 3 % en poids,
ladite teneur en durcisseur isocyanate dudit matériau de revêtement est dans la plage située entre 2 % en poids à 3,5 % en poids,
la teneur en méthyle éthyle kétone dudit matériau de revêtement est dans la plage située entre 15 % en poids à 18 % en poids, ledit méthyle éthyle kétone étant un constituant dudit solvant,
la teneur en toluène dudit matériau de revêtement est dans la plage située entre 24 % en poids à 30 % en poids, ledit toluène étant un constituant dudit solvant, et
la teneur en cyclohexane dudit matériau de revêtement est dans la plage située entre 3 % en poids à 5 % en poids, ledit cyclohexane étant un constituant dudit solvant.

10. Procédé pour fabriquer un support d'enregistrement magnétique selon la revendication 8, dans lequel,
une filtration est effectuée sur ledit matériau de revêtement dans les conditions suivantes :
un milieu filtrant ayant une performance telle que les particules qui passent à travers ledit filtre présentent un diamètre moyen de particule de 0,4 μm et un diamètre de particule maximal de 1,0 μm est utilisé,
la pression de la filtration est au-dessous de 2 Kg/cm$^2$, et
la durée de la filtration est plus longue que 60 minutes à un débit de 1 000 g/min dudit matériau de revêtement.

11. Procédé pour fabriquer un support d'enregistrement magnétique selon la revendication 8, dans lequel,
ladite poudre de carbone est traitée avec un agent de couplage du groupe silane.

12. Procédé pour fabriquer un support d'enregistrement magnétique selon la revendication 8, dans lequel,
ladite étape consistant à former une couche de revêtement arrière est un processus de revêtement par gravure comportant un processus de transfert de matériau de revêtement et un processus de séchage, dans ledit processus de transfert de matériau de revêtement, un rouleau (gravure) ayant une profondeur d'immersion du rouleau au-dessous de 450 µm est mis à tourner à une vitesse de rotation dans la plage située entre 65 tpm à 105 tpm, une lame maintient vers le bas ledit rouleau (gravure) à une pression au-dessous de 0,5 g et ledit substrat non magnétique défile à une vitesse dans la plage située entre 4,5 m/min à 5 m/min.

13. Procédé pour fabriquer un support d'enregistrement magnétique selon la revendication 12, dans lequel, ledit rouleau de gravure est mis à tourner à 70 tpm et ledit substrat non magnétique défile à 4,5 m/min.

14. Procédé pour fabriquer un support d'enregistrement magnétique selon la revendication 12, dans lequel, dans ledit processus de séchage, la température de séchage est fixée dans la plage située entre 60°C à 150°C.

15. Procédé pour fabriquer un support d'enregistrement magnétique selon la revendication 12, dans lequel, ledit processus de séchage est effectué dans de multiples parties continues et les températures respectives pour le séchage dans chaque partie sont fixées de manière telle que la température devient progressivement plus élevée dans l'ordre régulier.

16. Procédé pour fabriquer un support d'enregistrement magnétique selon la revendication 8, dans lequel, ledit procédé comprend de plus :
    une étape consistant à recuire à une température au-dessus de 60°C après ladite étape consistant à former la couche de revêtement arrière.

FIG. 1

FIG.2

FIG. 3

FIG. 4

FIG. 5

Distance (μm)

Height (nm)

FIG. 6

Distance (μm)

Height (nm)

FIG. 7

50.0
0.0
Height (nm)

0
124  248  372  496
Distance (um)

FIG. 8

50.0
0.0
Height (nm)

0
124  248  372  496
Distance (μm)

# FIG. 9(a)

# FIG. 9(b)

## FIG.10(a)

Distance (μm)

## FIG.10(b)

Distance (μm)

## FIG.11

Height(nm)

Distance (μm)

## FIG.12

Height(nm)

Distance (μm)

FIG.13

Height(nm)

Distance (μm)

FIG.14

Height(nm)

Distance (μm)

FIG.15

FIG.16

FIG.17

FIG.18

FIG.19

FIG. 20

FIG. 21

FIG.22

50.0

0.0

Height(nm)

Distance (μm)

## FIG.23(a)

50mv

100μs

## FIG.23(b)

100mv

50μs